# EUROPEAN PATENT APPLICATION

(11) **EP 0 841 498 A1**
(43) Date of publication of application: **13.05.1998**
(21) Application number: 96901541.1
(22) Date of filing: 06.02.1996
(51) Int. Cl.: F16D 35/00, F16D 31/02, F16D 31/08

(54) **POWER TRANSMISSION DEVICE**

(30) Priority: 09.02.1995 JP 22040/95
(71) Applicant: Mimura, Kenji, Yokohama, Kanagawa-ken 241 (JP)
(72) Inventor: Mimura, Kenji, Yokohama, Kanagawa-ken 241 (JP)
(74) Representative: Steinmeister, Helmut, Dipl.-Ing.
(86) International application number: JP9600236
(87) International publication number: WO9624783

(57) **Abstract**

A power transmission device capable of transmitting power so that the power is gradually increased in accordance with a rotational speed difference, and a differential gear using the same. When a rotational speed difference occurs between a case (1) and a ball disc (3), the balls (4) move back and forth in the grooves (1b) in the case (1) as they roll along a groove (3b) in the ball disc (3). When the difference between the rotational speeds of the case (1) and ball disc (3) becomes large during this time, the resistance occurring while the balls (4) roll against a viscous fluid (6) increases, and power is transmitted between the case (1) and ball disc (3). During this time, the resistance of the viscous fluid (6) increases in accordance with the moving speed of the balls (4), so that the power being transmitted becomes gradually large in accordance with the rotational speed difference.

## Description

### BACKGROUND OF THE INVENTION

### 1. Field of the Invention

The present invention relates to a power transmission device and a differential gear employing said power transmission device for applications mainly as the driving system for motor vehicles.

### 2. Description of the Prior Art

A differential gear being applied as the driving force transference system of a motor vehicle has so far been a device permitting revolution difference between the left-hand side and right-hand side drive wheels such as when the vehicle is traveling on a curved road or between the front and rear drive wheels of 4-wheel drive motor vehicles. Nevertheless, when one of the drive wheels only enters a surface area where the friction factor is extraordinarily small, such as on a snowy ground or sandy surface, said one drive wheel only skids losing the overall driving force and said vehicle more probably gets trapped at said spot. Also, when the load on the inner wheel is significantly reduced by centrifugal force when a vehicle is traveling on a curved road at a high speed, the driving force to negotiate the curve at a high speed tends to be lost by skidding of said inner wheel.

To make up for the aforesaid disadvantages, a power transmission device which is capable of transmitting the power to respective drive shafts so that the turning effort becomes gradually larger corresponding to the degree of the revolution difference between the two drive shafts can be installed between a pair of drive shafts which can cause revolution difference between themselves to allow revolution difference between the two drive shafts when the revolution difference between said two drive shafts remains comparatively small and to restrict the revolution difference tending to occur between the two drive shafts when the revolution difference between the two drive shafts becomes substantially large by skidding one of the two drive wheels on said drive shafts, by transferring the turning effort to the drive shaft of the skidding wheel to the other drive shaft.

Also, by connecting the drive shafts of the front wheels and rear wheels by said power transmission device, when the leading side drive wheel start to skid, the turning effort can be transferred to the trailing side drive shaft.

Nevertheless, since a motor vehicle is usually so designed that the braking force of the front wheel side becomes larger than that of the rear wheel side, when the revolution difference between the front wheels and the rear wheels expand s larger by occurrence of locking of the front wheels at times of braking, the turning effort of the rear wheels is transferred to the front wheel side, thus causing the front wheels and the rear wheels to be bound each other and it becomes difficult to make combined applications of this device with some other systems, such as the anti-lock braking system which works to control the braking force of respective wheels independently. Consequently, in such cases, if the power transmission can be made larger in one direction of rotation and smaller in the other direction of rotation, combined applications with said anti-lock braking system also become workable.

This invention has been made to cope with the aforesaid issues and it intends to provide a power transmission device which is capable of transmitting power in such a manner that power transmission become gradually larger as the revolution difference expands larger. This invention also intends to provide a power transmission device which is capable of making larger power transmission in one of the direction of rotation and smaller power transmission in the other direction of rotation.

### SUMMARY OF THE INVENTION

To achieve the aforementioned purposes, the power transmission device of this invention comprises a pair of rotary members positioned coaxially opposing prescribed faces each other and multiple number of rolling elements located in the space between said two rotary members facing each other, the opposing face of one of said pair of rotary members being provided with a groove to engage with said multiple number of rolling elements for free rolling in prescribed directions and the opposing face of the other of said pair of rotary members being provided with grooves which work let said multiple number of rolling elements makes reciprocal movements along traces thereof when revolution difference occurs between said two rotary members, with viscous fluid filled and sealed in said grooves of said pair of rotary members which work to exert resistance to movements of respective rolling elements.

Now, when revolution difference occurs between the two rotary members, respective rolling elements roll about along the groove of one of said pair of rotary members while making reciprocal movements along the grooves of the other rotary member.

At this time, when the revolution difference between said pair of rotary members expands larger, the resistance to respective rolling elements which rolls against the resistance of the viscous fluid increases thus causing transmission of power between the two rotary members. In this case, since the resistance of the viscous fluid increases as the moving speed of respective rolling elements rises, the power being transmitted gradually increases as the revolution difference expands larger.

Also, with the aforesaid structure, by provision of a fluid conduit which allows flow of said viscous fluid sustained in said grooves by means of transference of the rolling elements and by provision also of a flow restricting means to restrict the flow of said viscous fluid through said fluid conduit only when the revolution difference of said two rotary members occurs in prescribed one direction of rotation, the power transmission by function of the resistance of said viscous fluid can be made larger in the prescribed one of the directions of rotations and smaller in the other direction of rotation.

### BRIEF DESCRIPTION OF THE DRAWINGS

Fig. 1 is a side sectional view of the power transmission device of the first exemplary embodiment of this invention.

Fig. 2 shows the cross-section A-A of the drawing in Fig. 1.

Fig. 3 shows the cross-section B-B of the drawing in Fig. 1.

Fig. 4 shows the cross-section C-C of the drawing in Fig. 1.

Fig. 5 is a perspective exploded view of said power transmission device.

Fig. 6 and Fig. 7 are explanatory drawings indicating the movement occurring in said power transmission device.

Fig. 8 is a side sectional view of the differential gear of the second exemplary embodiment of this invention.

Fig. 9 shows the cross-section A-A of the drawing in Fig. 8.

Fig. 10 and Fig. 11 are perspective exploded view of said differential gear.

Fig. 12 is a side sectional view of the differential gear of the third exemplary embodiment of this invention.

Fig. 13 shows the cross-section A-A of the drawing in Fig. 12.

Fig. 14 and Fig. 15 are perspective exploded view of said differential gear.

Fig. 16 is a side sectional view of the power transmission device of the fourth exemplary embodiment of this invention.

Fig. 17 shows the cross-section A-A of the drawing in Fig. 16.

Fig. 18 shows the cross-section B-B of the drawing in Fig. 16.

Fig. 19 shows the cross-section C-C of the drawing in Fig. 16.

Fig. 20 is a perspective exploded view of said power transmission device.

Fig. 21 and Fig. 22 are explanatory drawings indicating the movement occurring in said power transmission device.

Fig. 23 is a side sectional view of the differential gear of the fifth exemplary embodiment of this invention.

Fig. 24 is an enlarged view of a portion of the drawing in Fig. 23.

Fig. 25 shows the cross-section A-A of the drawing in Fig. 23.

Fig. 26 shows the cross-section B-B of the drawing in Fig. 23

Fig. 27 shows the cross-section c-C of the drawing in Fig. 23.

Fig. 28 and Fig. 29 are perspective exploded view of said differential gear.

Fig. 30 is a side sectional view of the power transmission device of the sixth exemplary embodiment of this invention.

Fig. 31 shows the cross-section A-A of the drawing in Fig. 30.

Fig. 32 shown the cross-section B-B of the drawing in Fig. 30.

Fig. 33 shows the cross-section C-C of the drawing in Fig. 30.

Fig. 34 is a perspective exploded view of said power transmission device.

Fig. 35 and Fig. 36 are explanatory drawings indicating the movement occurring in said power transmission device.

Fig. 37 is a side sectional view of the differential gear of the seventh exemplary embodiment of this invention.

Fig. 38 shows the cross-section A-A of the drawing in Fig. 37.

Fig. 39 shows the cross-section B-B of the drawing in Fig. 37.

Fig. 49 shows the cross-section C-C of the drawing in Fig. 37.

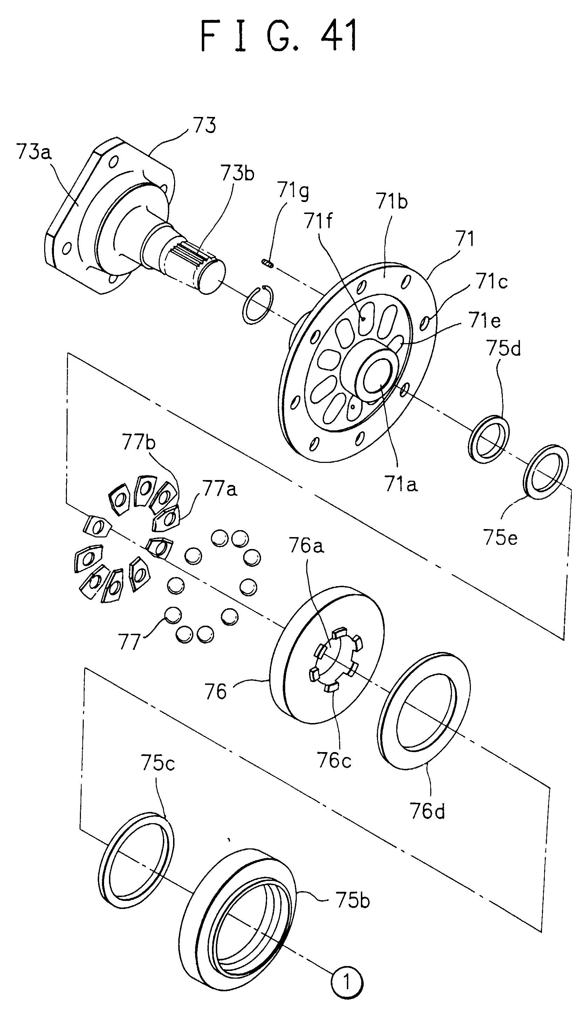

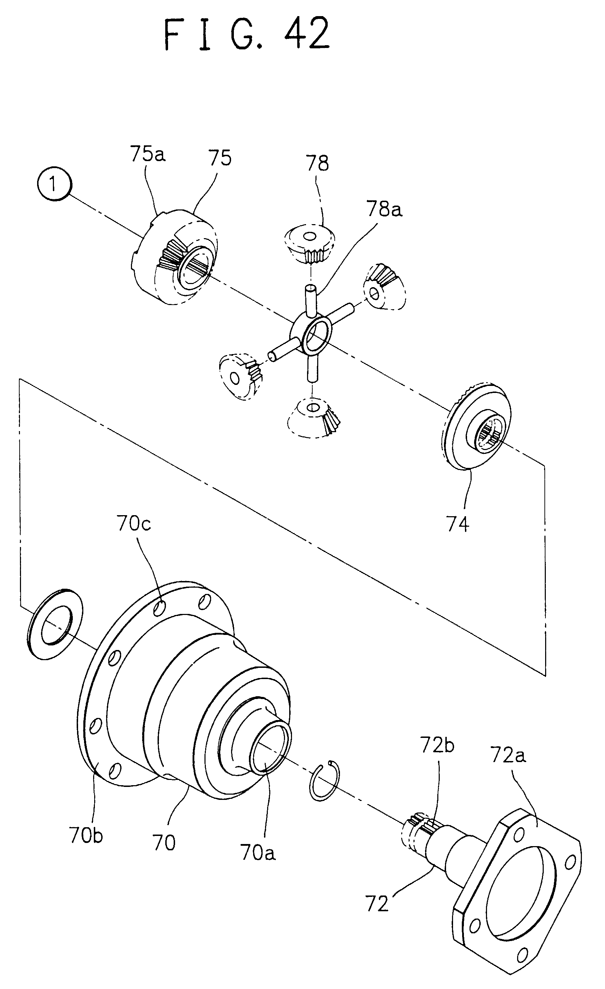

Fig. 41 and Fig. 42 are perspective exploded view of said differential gear.

### DESRIPTIONS OF THE PREFERRED EMBODIMENTS

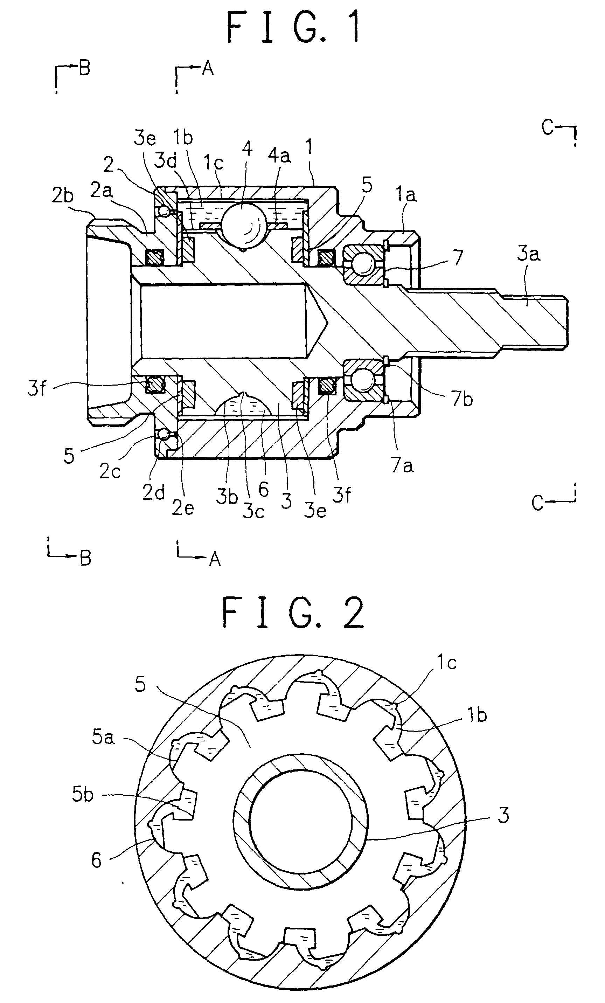

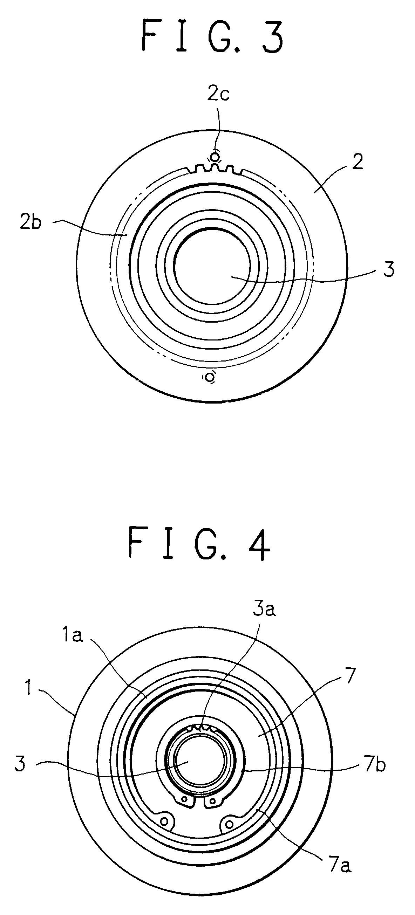

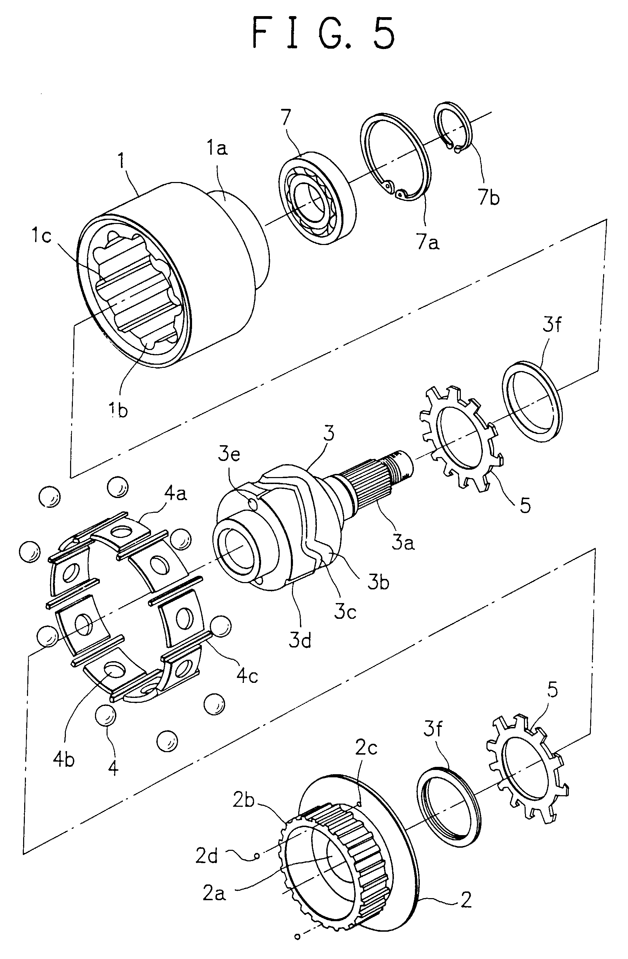

Referring more particularly to the exemplary embodiment of this invention, Fig. 1 through Fig. 5 show the power transmission device of the first exemplary embodiment of this invention, Fig. 1 being a side sectional view of the power transmission device of the first exemplary embodiment, Fig. 2 showing the cross-section A-A of the drawing in Fig. 1, Fig. 3 showing the cross-section B-B of the drawing in Fig. 1, Fig. 4 showing the cross-section C-C of the drawing in Fig. 1 and Fig. 5 being an exploded perspective view of said power transmission device.

Said power transmission device consists of a case 1, a case cover 2 blocking one end of said case 1, a ball disc 3 being positioned coaxially with said case 1, multiple number of balls 4 placed between the opposing peripheral surfaces of said case 1 and ball disc 3 and a pair of movable plates 5 facing each other with said ball disc 3 in between, the grooved space in said case 1 where said balls 4 moves about being filled by viscous fluid 6.

Namely, said case 1 constitutes one of the two rotary members, said ball disc constitutes the other rotary member, said multiple number of balls 4 constitute the rolling elements and said movable plates 5 constitutes the conduit flow restricting means.

Said case 1 is of a cylindrical construction with its one end opened and with a bearing 1a supporting one end of said ball disc 3 being installed at the center of its outer end. In the bore surface of said case 1, multiple number of grooves 1b which engages with said multiple number of balls 4 are being provided, respective grooves extending linearly in the axial direction and being laid out at equal intervals in the peripheral direction. Also, in said multiple number of grooves 1b, fluid conduits 1c securing separate space from said balls 4 are being provided individually and a viscous fluid 6 is flowing through said fluid conduits 1c.

Said case cover 2 is of a disc shape being provided with, at its center, a bearing 2a to support the other end of said ball disc 3. Around the outer periphery of said case cover 2, a coupler structure 2b is being provided, said coupler structure connecting to one of the drive shafts, indication of which being omitted from relevant drawings, and the peripheral surface of said coupler structure being formed into spline.

Also, said case cover 2 is being provided with a feed port 2c to feed said viscous fluid 6 into said case 1, said feed port 2c being so designed to be plugged by a ball plug 2d after said viscous fluid has been charged into said case 1, said ball plug 2d being cemented by crushing the peripheral wall structure surrounding said feed port 2c.

Said feed ports 2c are being provided at 2 places or more, one at least being meant for the feeding purpose of said viscous fluid 6 and the other one at least being meant for internal air Purge purpose. Moreover, through the thickness of said case cover 2, an orifice 2e is being opened which works to disperse said viscous fluid 6 having been fed into said case 1 toward the peripheral direction inside said case 1, said orifice being connected to said feed port 2c.

Said ball disc 3 being equipped with a shaft 3a which extends in the axial direction, to said shaft 3a, the other drive shaft indication of which being omitted from the relevant drawings is being connected. Said shaft 3a of raid ball disc 3 being supported by the bearing 1a of the case 1, via a bearing 7 and said bearing 7 being fastened to said case 1 by a pair of C-rings 7a and 7b.

In the peripheral surface of said ball disc 3, a groove 3b which engages with the multiple number of balls 4 is being formed, said groove 3b being formed in continuation in the peripheral direction making zigzag curves along the axial direction to let said multiple number of balls 4 make reciprocal movements along the multiple number of grooves 1b being formed in the bore surface of the case 1.

Also, in said groove 3b, a fluid conduit 3c securing separate space from said balls 4 is being provided and the viscous fluid 6 is flowing through said fluid conduit 3c. In the peripheral surface of said ball disc 3, plural number of fluid conduits 3d connecting said groove 3b to the case cover side end of said ball disc 3 are being formed, said fluid conduits 3d working to feed the viscous fluid 6 having been fed through the feed port 2c formed in said case cover 2 into said groove 3b.

Moreover, at both ends of said ball disc 3, permanent magnet pieces 3e are being provided, said permanent magnet pieces 3e being so positioned that their respective surfaces came level with the end face of said ball disc 3. Also, oil seals 3f are being provided between said ball disc 3 and said case 1 and between said ball disc 3 and said case cover 2.

Respective balls 4 are being laid out along the peripheral direction of said ball disc 3 engaging individually with the grooves 1b being formed in the bore surface of said case 1 and the groove 3b being formed in the peripheral surface of said ball disc 3 for free rolling. Respective balls 4 are being retained individually by multiple number of ball holders 4a of a plate shape for free rolling, each ball holder 4a being provided with a hole 4b to retain each ball 4. Also, said ball holders 4a are being inserted into space occurring between said case 1 and said ball disc 3 for free sliding inside and between each ball holder 4a, a spacer 4c each is being provided.

The movable plate 5 are made of a magnetic substance of a disc shape and are being positioned at both ends of said ball disc 3 being attracted to said permanent magnet pieces 3e for free rotation. Each movable plate 5 being provided with plural number of projections 5a which are to be inserted individually into respective grooves 1b of said case 1, said projections 5a being so shaped to close a portion of respective end space of said grooves 1b. Also, between each projection 5a, a cutout 5b is being formed which comes outside each groove 1b, said cutout 5b forming a conduit channel between adjoining grooves 1b.

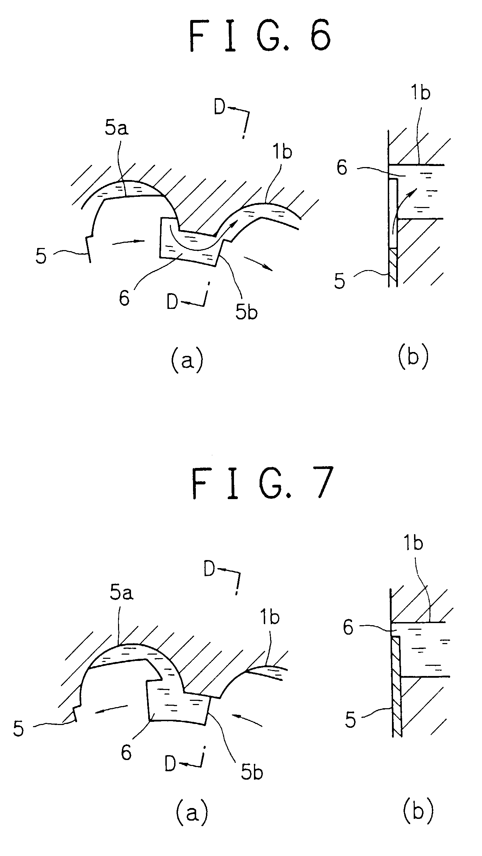

Namely, as shown in Fig. 6, when said movable plate 5 turns toward a direction, said projection 5a hits one side of the groove 1b to stop rotation of said movable plate 5, where the cutout 5b connects two adjoining grooves 1b and, as shown in Fig. 7, when said movable plate 5 turns toward the other direction, the projection 5a hits the other side of the groove 1b to stop rotation of said movable plate 5, where said cutout 5b connects to one of the two adjoining grooves 1b only.

Meanwhile, the cross-sectional views D-D in the drawings in Fig. 6 (a) and Fig. 7 (a) are being indicated as Fig. 6 (b) and Fig. 7 (b), respectively. The viscous fluid 6 consists of such a substance as silicon oil and its being filled inside the space being hermetically sealed by the structures of said case 1, said case cover 2 and said ball disc 3.

With a power transmission device of the aforementioned structure, when revolution difference occurs between the case 1 and ball disc 3, respective balls 4 start to make reciprocating movements inside respective grooves 1b of said case 1 while rolling along the trace of the groove 3b being formed in the peripheral surface of the ball disc 3. At this time, when the revolution difference between said case 1 and said ball disc 3 expands larger, the resistance of the viscous fluid 6 against rolling about of respective balls 4 increases, thus causing power transmission between said case 1 and ball disc 3.

Now, since the resistance of said viscous fluid 6 increases as the moving speed of respective balls 4 rises, transmitted power gradually increases correspondingly as the revolution difference expands.

Also, when respective balls 4 roll about along the traces of respective grooves 1b and 3b both of which are being sealed by respective ball holders 4a and spacers 4c, the viscous fluid 6 is forced to flow through respective fluid conduit 1c and 3c being formed inside respective grooves 1b and 3b, the flow resistance occurring from said flow of said viscous fluid 6 also constitute a force to transfer the power.

In this case, when the revolution difference between said case 1 and said ball disc 3 occurs in a prescribed direction, the movable plate 5 being attracted to the permanent magnet piece 3e turns in the same direction as the rotation of said ball disc 3, connecting the two adjoining grooves 1b being formed on the case 1 through mating cutout 5b of said movable plate 5, as shown in Fig. 6. Thereby, when respective balls 4 roll along respective grooves 1b, the viscous fluid 6 existing inside said grooves 1b is forced into the adjoining groove 1b through respective cutouts 5b of said movable plate 5.

While, if the revolution difference between said case 1 and ball disc 3 occurs in the other relative-direction, the movable plate 5 being attracted by said permanent magnet piece 3e turns toward the same direction of rotation of said ball disc 3, closing the connection through said cutout 5b between the two adjoining grooves 1b as shown in Fig. 7. When this happens, the viscous fluid 6 existing inside respective grooves 1b does not move into the adjoining groove 1b in spite of the movements of respective balls 4 existing inside respective grooves 1b, thus the resistance of said viscous fluid 6 against movements of respective balls 4 increases.

For example, when the front wheels and rear wheels of a motor vehicle are connected via the power transmission device of this exemplary embodiment, when the leading side drive wheels start to skid, the torque can be duly transferred to the trailing side drive wheels.

Namely, suppose the ball disc 3 side is being connected to the leading side drive shaft and the case 1 side is being connected to the trailing side drive shaft, under normal travels of the motor vehicle, said case 1 and said ball disc 3 respectively rotate independently at an almost same revolution, while if the leading side drive wheels skid by slippage, the revolution difference between said case 1 and said ball disc 3 expands larger and the power of said ball disc 3 is transferred to said case 1 by the resistance of said viscous fluid 6.

In such cases, when the directions of rotation of said case 1 and said ball disc 3 are different, since the power transmission by the resistance of the viscous fluid 6 is so designed to become larger in one direction of rotation and to become smaller in the other direction of rotation and to become smaller in the other direction of rotation, when applied to a motor vehicle wherewith the braking force of the front wheel side are larger than that of the rear wheel side, if the torque transference between said case 1 and said ball disc 3 is designed to become smaller when the front wheels are locked, the front wheels and the rear wheels become less bound from each other when braking is being made, thus providing better chances of successful combinations with the anti-lock brake systems.

Since the power transmission device of this exemplary embodiment is so designed that the resistance occurring when respective balls 4 roll about opposing the existence of the viscous fluid 6 works to transfer the power between the case 1 and the ball disc 3, power transmission can be effected corresponding to the degree of the revolution difference.

Consequently, when it is used as, for example, a revolution-sensitive revolution difference restricting mechanism for the power train of motor vehicles, accurate revolution difference restricting effects corresponding to the degree of differences in the revolution rates can always be obtained and it can also be applied to any other facilities and equipment which requires a mechanism to transfer necessary power corresponding to the differences in the revolution rates.

Also, since this power transmission device is so designed that flow of the viscous fluid 6 into the adjoining groove 1b of the case 1 may be interrupted only when the revolution difference between the case 1 and the ball disc 3 occurs in a prescribed direction of rotation, by employment of the movable plates 5 which turn together with the ball disc 3, the degree of power transmisison by use of the resistance of the viscous fluid 6 can be made larger in the prescribed direction of rotation and smaller in the other direction, thus providing better chances of successful combinations with, such as, the anti-lock brake systems, by its advantage of changing the degree of power transmission corresponding to the current statuses.

Meanwhile, with the power transmission device of the aforementioned exemplary embodiment, although the movable plates 5 are being attracted to the end faces of the ball disc 3 by use of permanent magnet pieces 3e in order to let respective movable plates 5 follow rotation of the case 1 and the ball disc 3, said movable plates 5 may also be depressed to the end faces of the ball disc 3, the case 1 or the case cover using springs or the sort.

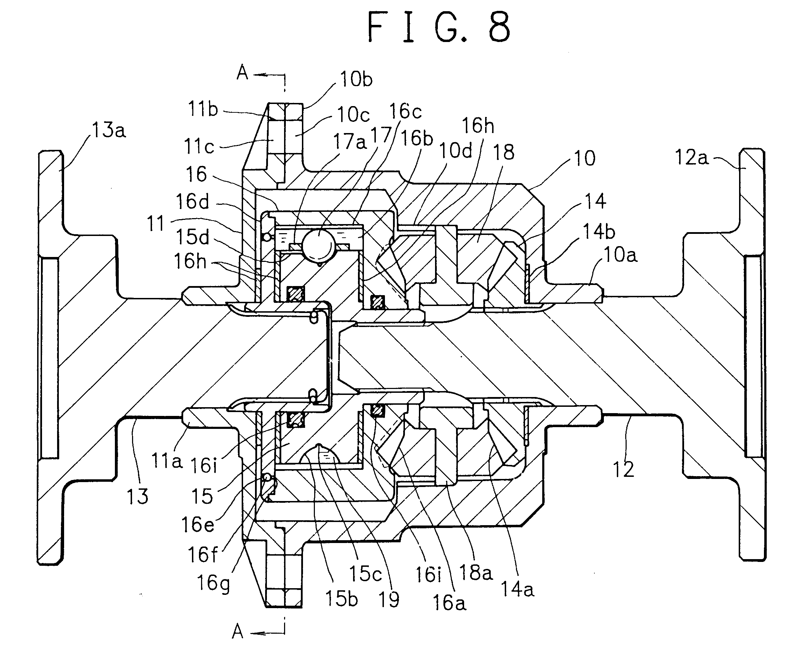

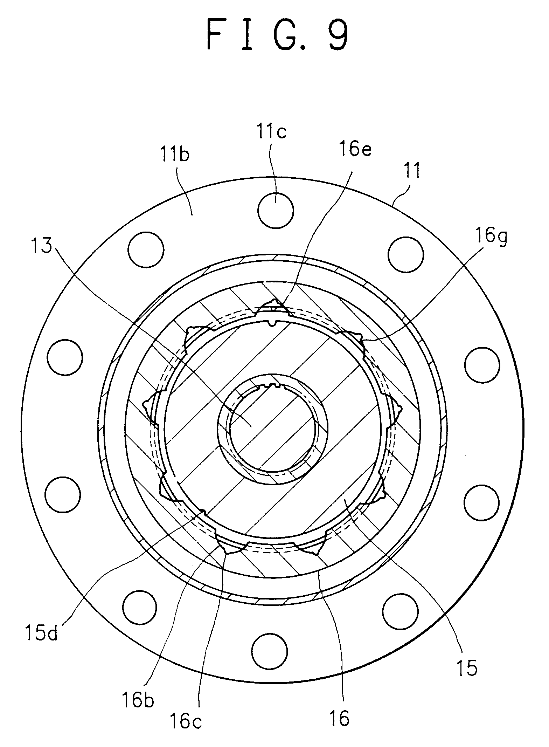

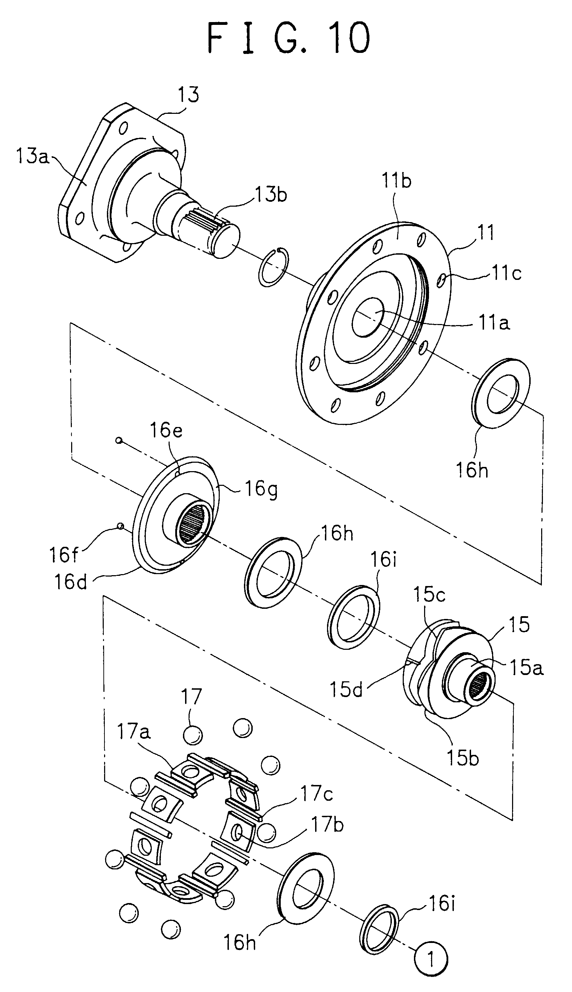

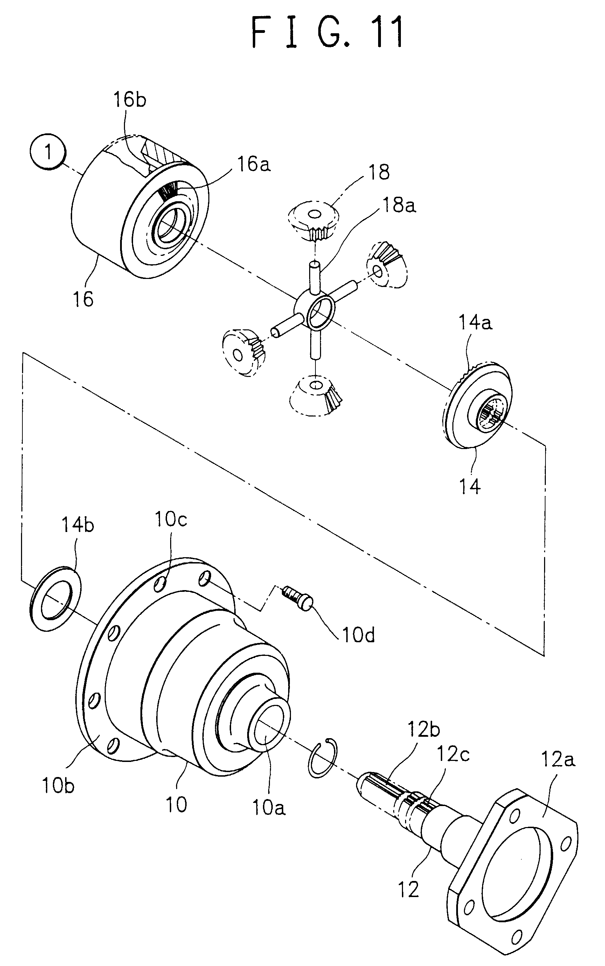

Referring to another exemplary embodiment of this invention, Fig. 8 through Fig. 11 show the second embodiment of this invention which has been applied as a power transmission device, namely a differential gear, Fig. 8 being a side sectional view of the differential gear of the second exemplary embodiment, Fig. 9 showing cross-sectional of A-A of the drawing in Fig.8 and Fig. 10 and Fig. 11, two drawings together, being a set for an exploded perspective view of said differential gear. Meanwhile, the alternate long and short dash lines in Fig. 10 and Fig. 11 stand for continuation via the same number codings, namely 〈1〉, of the parts being drawn in these two separate sheets.

Said differential gear consists of a gear case 10, a gear case cover 11 closing one end of said gear case 10, a pair of drive shafts 12 and 13 being positioned coaxially, a side gear 14 which is structured to rotate integrally with one 12 of the drive shafts, a ball disc 15 which is also structured to rotate integrally with the same drive shafts 12, a housing gear 16 which is structured to rotate integrally with the other drive shafts 13, multiple number of balls 17 being inserted between the opposing peripheral surfaces of said ball disc 15 and said housing gear 16 and total four units of pinion gears 18 which works to transfer the power of said gear case 10 to said side gear 14 and said housing gear 16, allowing occurrence of revolution differences, the space inside said gear case 10 where said multiple number of balls 17 roll about being filled by a viscous fluid 19.

Namely, said gear case 10 constitutes the input side rotary member, said one drive shaft 12, said gear 14 and ball disc 15 constitute the output rotary members of one side, said other drive shaft 13 and housing gear 16 constitute the output rotary members of the other side and said multiple number of balls 17 constitute the rolling elements.

Said gear case 10 is of a cylindrical construction with its one end opened and with a bearing 10a supporting one of the drive shaft 12 installed at its center. Around the periphery of said gear case 10, a flange 10b is provided wherein multiple number of holes 10c for bolting are being opened. Also, grooves 10d to support said pinion gears 18 are being provided around the bore surface of said gear case 10.

Said gear case cover 11 is of a disc shape being provided with, at its center, a bearing 11a to support said other drive shaft 13. Around the periphery of said gear case cover 11, a flange 11b is being provided wherein multiple number of holes 11c for bolting are being opened. Namely, said gear case cover 11 is being attached to said gear case 10 by bolts 11d clamping said flanges 10b and 11b together.

Said drive shafts 12 and 13 are being provided with flanges 12a and 13a to connect to the left-hand side and right-hand side drive wheels of a motor vehicle, respectively, one 12 of the drive shafts being designed longer in length in the axial direction than the other drive shaft 13. Said one drive shaft 12 is being provided with splined coupler structures 12b and 12c, at two places on its peripheral surfaces, the top end coupler structure 12b being connected to said ball disc 15 and the inside coupler structure 12c being connected to said side gear 14. Also, the other drive shaft 13 is being provided with a splined coupler structure 13b being connected to said housing gear 16.

Said side gear 14 is being coaxially connected to said one 12 of the drive shafts 12 with a bevel gear 14a being formed on the surface facing said housing gear 16. Also, a thrust washer 14b is being inserted between the end face if said side gear 14 and said gear case 10.

Said ball disc 15 is being equipped with a splined cylindrical structure 15a, said cylindrical structure 15 a being connected to one 12 of the drive shafts. In the peripheral surface of said ball disc 15 , a groove 15b to engage with said multiple number of balls 17 is being formed in continuation in the peripheral direction making zigzag curves along the axial direction to let said balls 17 make reciprocal movements toward the axial direction of said gear case 10.

Also, in the bottom of said groove 15b, a fluid conduit 15c securing separate space from said multiple number of balls 17 is being provided and said viscous fluid 19 is flowing through said fluid conduit 15c. Moreover, in the peripheral surface of said ball disc 15, plural number if fluid conduits 15d connecting said groove 15b to the gear case cover side end of the ball disc 15 are being formed.

Said housing gear 16 is of a cylindrical construction with a bevel gear 16a being provided on the surface facing the side gear 14. Inside said housing gear 16, said ball disc 15 is being housed with its cylindrical structure 15a piercing through the opening of said housing gear 16. In the inner peripheral surface of said housing gear 16, multiple number of grooves 16b to engage individually with said multiple number of balls 17 are being provided, respective grooves 16b extending linearly in the axial direction and being laid out at equal intervals in the peripheral direction.

Namely, said multiple number of grooves 16b constitute the ball guide. Also, in the bottom of said multiple number of grooves 16b, fluid conduits 16c securing separate space from respective balls 17 are being provided and a viscous fluid 19 is flowing through said fluid conduits 16c.

The other side of said housing gear 16 is being closed by the housing cover 16d and the other drive shaft 13 is being connected to said housing cover 16d. Also, said housing cover 16d is being provided with a feed port 16e to feed said viscous fluid 19 into said housing gear 16, said feed port 16e being so designed to be plugged by a ball plug 16f after said viscous fluid 19 has been charged into said housing gear 16, said ball plug 16f being cemented by crushing the peripheral wall structure surrounding said feed port 16e.

Said feed port 16e being provided at 2 places or more, one at least being meant for the feeding purpose of said viscous fluid 19 and the other one at least being meant for internal air purge purpose, whereby said viscous fluid 19 being fed through said feed port 16e is being filled in said groove 15b through said fluid conduits 15d of said ball disc 15. Moreover, through the thickness of said housing cover 16d, an orifice 16g is being opened which works to disperse said viscous fluid 19 having been fed into said housing gear 16 toward the peripheral direction inside said housing gear 16, said orifice 16g being connected to said feed port 16e.

Also, a thrust washer 16h each is being inserted between one end of said ball disc 15 and said housing cover 16d, between the other end of said ball disc 15 and said housing gear 16 and between said housing cover 16d and said gear case cover 11 and an oil seal 16i each is being inserted between said ball disc 15 and said housing gear 16 and between said ball disc 15 and housing cover 16d.

Said multiple number of balls 17 are being laid out around the peripheral direction of said ball disc 15 engaging individually with said groove 15b formed in the outer peripheral surface of said ball disc 15 and with said multiple number of grooves 16b being formed in the inner peripheral surface of said housing gear 16 for free rolling. Respective balls 17 are being retained individually by multiple number of ball holders 17a of a plate shape for free rolling, each ball holder 17a being provided with a hole 17b to retain each ball 17. Also, said ball holders 17a are being inserted into space occurring between said ball disc 15 and said housing gear 16 for free sliding inside and between each ball holder 17a, a spacer 17c each is being provided.

Respective pinion gears 18 are being supported for free turning by pinion shafts 18a orthogonally positioned each other, each pinion gear 18 engaging with the bevel gear 14a of the side gear 14 and with the bevel gear 16a of the housing gear 16.

Said pinion shafts 18a are being fastened to the grooves 10d of the gear case 10 to rotate integrally with said gear case 10. Namely, a revolution difference transference mechanism is being constituted by said pinion gears 18 and said pinion shafts 18a and by individual trailing rotations of said pinion gear 18, said side gear 14 and said housing gear 16 are being allowed to make relative-rotations in relatively-opposing directions from each other.

Said viscous fluid 19 consists of such a substance as silicon oil and it is being filled inside the space being hermetically sealed by the structures of said ball disc 15, said housing gear 16 and said housing cover 16d.

With a differential gear of the aforementioned structure, the ring gear (indication being omitted from the drawing) which works to transfer the drive force of the engine is being coupled to the flange 10b of the gear case 10 and the whole structure of said differential gear rotates around he axis if rotation of said gear case 10.

Explanations shall hereafter be made on the movements in the differential gear of this exemplary embodiment in case revolution difference is not occurring between the two drive shafts 12 and 13, in case revolution difference is occurring between respective drive shafts 12 and 13 and in case one of the two drive shafts 12 and 13 is under a slippery surface environment.

First, in case revolution difference is not occurring between respective drive shafts 12 and 13 such as when a vehicle is traveling straight on a road surface with a sufficient friction factor, when the gear case 10 rotates by external drive force, the pinion shafts 18a also rotate integrally with said gear case 10 and such power is transferred to the side gear 14 and housing gear 16 via the pinion gears 18.

In this case, since revolution difference is not occurring between the two drive shafts 12 and 13, said pinion gears 18 do not make trailing turns. Also, the power having been transferred to the housing gear 16 is being transferred to the other drive shaft 13 via the housing cover 16d.

Next, in case revolution difference is occurring between respective drive shafts 12 and 13 while torque of the drive force is being transferred evenly to respective drive wheels such as when a vehicle is making a turn on a road surface with a sufficient friction factor, when revolution difference occurs between the two drive shafts 12 and 13, respective pinion gears make trailing turns, allowing rotations in relatively-opposing directions for said side gear 14 and said housing gear 16, thus permitting revolution difference to occur.

At this time, since the ball disc 15 rotates integrally with one 12 of the drive shafts and the housing gear 16 rotates integrally with the other drive shafts 13, said ball disc 15 and said housing gear 16 make relative-rotations in relatively-opposing directions from each other. By these movements, respective balls 17 make reciprocal movements along the traces of respective grooves 16b of the housing gear 16, while rolling about along the trace of the groove 15b of the ball disc 15.

Then, in case the revolution difference between the two drive shafts 12 and 13 expands wider such as when one only of the two drive wheels starts skidding failing to grab the road surface under a slippery surface environment, the resistance against rolling abouts of respective balls 17 pushing the viscous fluid 19 increases which in turn works to restrict the revolution difference.

At this time, since the resistance of said viscous fluid 19 increases corresponding to the rises in the moving speed of respective balls 17, the revolution difference restricting effect gradually increases corresponding to the degree of the difference in respective revolution rates of the two drive shafts 12 and 13.

Also, when respective balls 17 roll about inside respective grooves 15b and 16b which are being hermetically sealed by respective ball holders 17a and spacers 17c, as the viscous fluid 19 flows through the fluid conduits 15c and 16c being provided in respective bottoms of said grooves 15b and 16b, the flow resistance occurring from said flow of said viscous fluid 10 also constitute a force to transfer the power.

Thus, with the differential gear of this exemplary embodiment, since the revolution difference occurring between respective drive shafts 12 and 13 is being restricted by the resistance occurring when respective balls 17 roll about against existence of the viscous fluid 19, the revolution difference restricting effect so changes by itself to rise gradually corresponding to the degree of the difference in respective revolution rates.

Consequently, since the differential gear of this exemplary embodiment does not exhibit abruptly high revolution difference restricting effect at an initial stage of occurrence of revolution difference, respective drive wheels less tend to bind each other, thus providing better chances of successful combinations with such as the anti-lock brake systems.

Also, when a structure similar to that of aforementioned first exemplary embodiment is also employed to the differential gear of this second exemplary embodiment, wherewith the viscous fluid 19 is allowed to flow into the adjoining groove 16b from each groove 16b of the housing gear 16 only when rotation is being made in the prescribed one direction of rotation, by such a setting as may work to lessen the revolution difference restricting effect when the front wheels are locked, the front wheels and rear wheels become less bound from each other when braking is being made, thus providing better chances of successful combinations with the anti-lock brake systems.

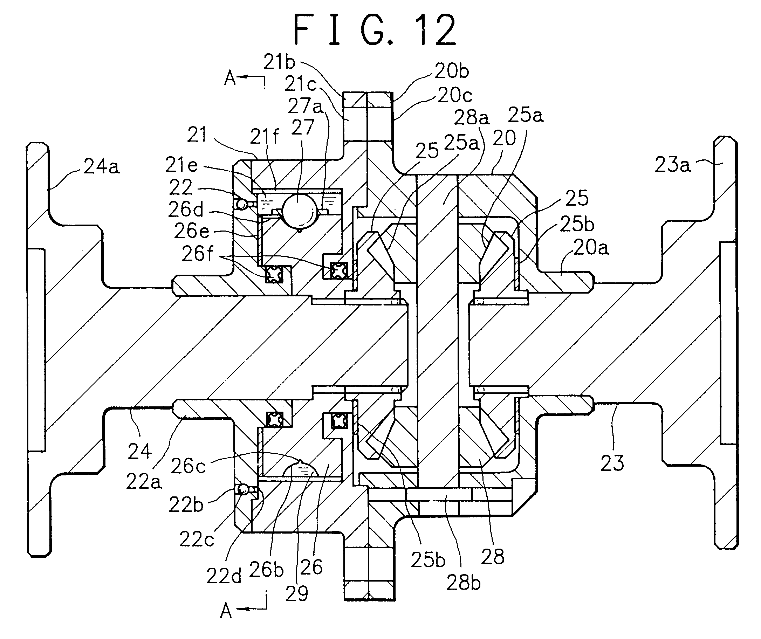

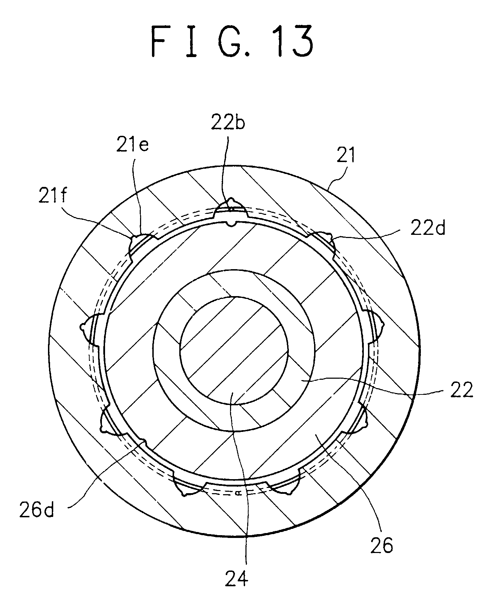

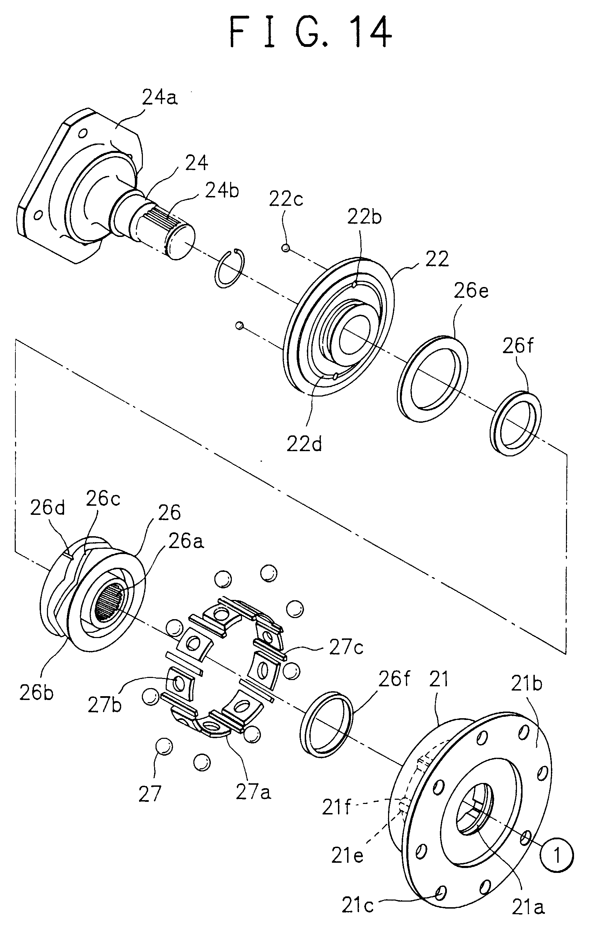

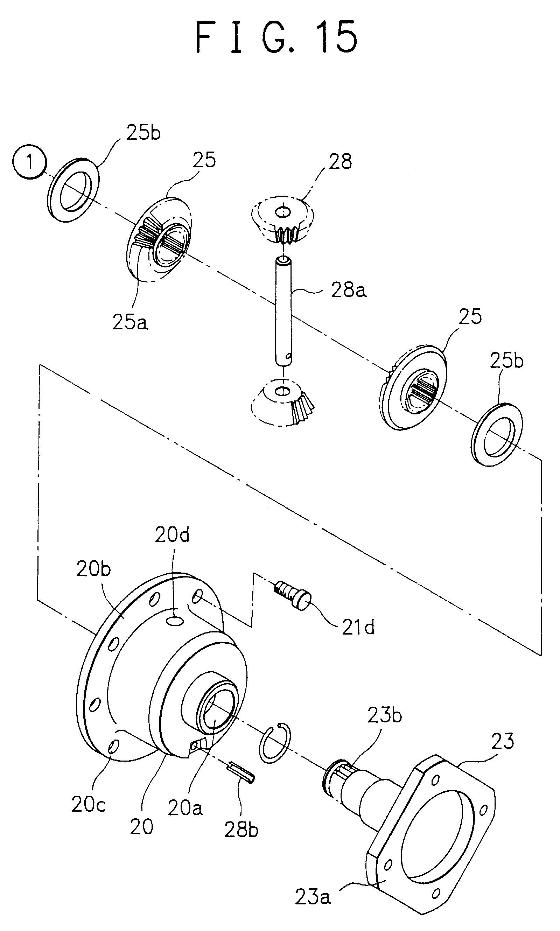

Referring to some other exemplary embodiment, Fig. 12 through Fig. 15 show the third exemplary embodiment of this invention which has been applied as a power transmission device, namely a differential gear, Fig. 12 being a side sectional view of the differential gear of the third exemplary embodiment of this invention, Fig. 13 showing cross-section A-A of the drawing in Fig.12 and Fig. 14 and Fig. 15, two drawings together, being a set for an exploded perspective view of said differential gear. Meanwhile, the alternate long and short dash lines in Fig.14 and Fig. 15 stand for continuation via the same number coding, namely 〈1〉, of the parts being drawn in these two drawings.

Said differential gear consists of a pair of gear cases 20 and 21, a gear case cover 22 closing one end of one 21 of the gear cases, a pair of drive shafts 23 and 24 being positioned coaxially, a pair of side gears 25 which are structured to rotate integrally with said drive shafts 23 and 24, respectively, a ball disc 26 which is structured to rotate integrally with one 24 of the two drive shafts, multiple number of balls 27 being inserted between the opposing peripheral surfaces of said ball disc 26 and one 20 of the two gear cases and total two pinion gears 28 which works to transfer the power of respective gear cases 20 and 21 to respective side gears 25, allowing occurrence of revolution difference, the space inside the other gear case 21 where said multiple number of balls 27 roll about filled by a viscous fluid 29.

Namely, said pair of gear cases 20 and 21 constitute the input side rotary member, said one 23 of the two drive shafts and said one 25 of the two side gears constitute one of the two output side rotary members, said other drive shaft 24, said other side gear 25 and said ball disc 26 constitute the other output side rotary member and said multiple number of balls 27 constitute the rolling elements.

One 20 of said pair of gear cases is of a cylindrical construction with its one end opened and with a bearing 20a supporting one 23 of the two drive shafts installed at its center. Around the periphery of said gear case 20, a flange 20b is being provided wherein multiple number of holes 20c for bolting are being opened. Also, said gear case 20 is provided with a hole 20d to suspend said pinion gears 28 in position.

The other gear case 21 is also of a cylindrical construction with its one end opened and an opening 21a to accept the other drive shaft 24 and ball disc 26 being provided at its center. Around the periphery of said gear case 21, a flange 21b is provided wherein multiple number of holes 21c for bolting are being opened. Namely, said gear cases 20 and 21 are being attached to each other by bolts 21d clamping said flanges 20b and 21b together.

Also, in the inner peripheral surface of said gear case 21, multiple number of grooves 21e to engage individually with said multiple number of balls 27 are being provided, respective grooves 21e extending linearly in the axial direction and being laid out at equal intervals in the peripheral direction.

Namely, said multiple number of grooves 21e constitute the ball guides. Also, in the bottom of said grooves 21e, fluid conduits 21f securing separate space from respective balls 27 are being provided and a viscous fluid 29 is flowing through said fluid conduits 21f.

Said gear case cover 22 is of disc shape being provided with, at its center, a bearing 22a to support the other drive shaft 24 and is attached to the other gear case 21 by welding. Said gear case cover 22 is provided with a feed port 22b to feed said viscous fluid 29 into said other gear case 21, said ball plug 22c being cemented by crushing the peripheral wall structure surrounding said feed port 22b.

Said feed port 22b is provided at two places, one being meant for the feeding purpose and the other being meant for internal air purge purpose. Moreover, through the thickness of said gear case cover 22, an orifice 22d is being opened which works to disperse said viscous fluid 29 having been fed into said gear case 21 toward peripheral direction inside said gear case 21, said orifice 22d being connected to said feed port 22b.

Respective drive shafts 23 and 24 are provided with respective flanges 23a and 24a for connection to the left-hand side and right-hand side drive wheels if a motor vehicle and one 24 of the two drive shaft 23. Said pair of drive shafts 23 and 24 carry splined coupler structures 23b and 24b around the peripheral surface of their cylindrical shafts and the coupler structure 23b of one 23 of the two drive shafts is being connected to one of the side gears 25 and the coupler structure 24b of the other drive shafts 24 is being connected to the other side gear 25 at the tip end section of said coupler structure 24b and to the ball disc 26 at the intermediate section of said coupler structure 24b.

Said two side gears 25 are being connected coaxially with said drive shafts 23 and 24 with bevel gears 25a being provided on the opposing surfaces. Also, a thrust washer 25b each is being inserted between the end face of one of said side gears 25 and one 21 of the two gear cases and between the end face of the other side gear 25 and the other gear case 20.

Said ball disc 26 is being housed inside one 21 of the two gear cases and it is being equipped with a splined bore 26a and the other drive shaft 24 is being connected to said splined bore 26a.

In the outer peripheral surface of said ball disc 26, a groove 26b is being formed, with which multiple number of balls 27 engage, in continuation in the peripheral direction making zigzag curves along the axial direction whereby said multiple number of balls 27 make reciprocal movements in the axial direction of gear cases 20 and 21 when said balls 27 follow the trace of said zigzag curves.

Also, in the bottom of said groove 26b, a fluid conduit 26c securing separate space from respective balls 27 is being provided and a viscous fluid 29 is flowing through said fluid conduit 26c. Moreover, in the peripheral surface of said ball disc 26, plural number of fluid conduits 26d connecting said groove 26b to the gear case cover 22 side end of said ball disc 26 are being provided, said fluid conduits 26d working to lead the viscous fluid 29 having been charged through the feed port 22b of the gear case cover 22 into said groove 26b.

Furthermore, a thrust washer 26e is being inserted between the end face of said ball disc 26 and said gear case cover 22 and an oil seal 26f each is being inserted between said ball disc 26 and said gear case 21 and between said ball disc 26 and said gear case cover 22.

Said multiple number of balls 27 are being laid out in the peripheral direction of said ball disc 26, engaging respectively with the groove 26b being formed in the peripheral surface of said ball disc 26 and multiple number of grooves 21e being formed in the inner peripheral surface of the other gear case 21, for free rolling.

Respective balls 27 are being retained individually by multiple number of ball holders 27a of a plate shape for free rolling, each ball holder 27a being provided with a hole 27b to retain each ball 27. Also, said ball holders 27a are being inserted into space occurring between said ball disc 26 and said gear case 21 for free sliding inside and between each ball holder 27a, a spacer 27c each is being provided.

Said pinion gears 28 are being suspended for free turning by a column structured pinion shaft 28a for free turning and engaging with the bevel gear 25a of one of the side gears 25 and the bevel gear 25a of the other side gear 25, respectively. Both end sides of said pinion shaft 28a are being inserted through the hole 20d being opened through the cylindrical body of said case 20 and is fastened to said gear case 20 being clamped by a spring pin 28 at its one end, thus rotating integrally with said gear case21.

Namely, said pinion gears 28 and said pinion shafts 28a constitute a revolution difference transference mechanism and by trailing rotations of said pinion gears 28, the two side gears 25 makes relative-rotation in relative-opposing directions.

Said viscous fluid 29 consists of such a substance as silicon oil and it is being filled inside the space being hermetically sealed by the structures of one 21 of said gear cases, said gear case cover 22 and said ball disc 26.

With a differential gear of the aforementioned structure, when a revolution difference occurs between the two drive shafts 23 and 24, respective pinion gears 28 start making trailing rotations to allow the two side gears 25 to make relative-rotations in relatively-opposing directions, thus allowing occurrence if revolution differences. At this time, since said ball disc 26 rotates integrally with one 24 of said pair of drive shafts, revolution difference occurs between said ball disc 26 and said gear case 21.

By these movements, respective balls 27 make reciprocal movements along the traces of respective grooves 21e of the gear case 21, while rolling about along the trace of the groove 26b of the ball disc 26. In this case, since the resistance of the viscous fluid 29 against rolling of respective balls 27 increases as the moving speed of respective balls 27 rises, the revolution difference restricting force increases corresponding to the degree of the difference in the revolution rates between the two drive shafts 23 and 24.

Also, when respective balls 27 roll about inside respective grooves 21e and 26b, which are being hermetically sealed by respective ball holders 27a and spacers 27c, as the viscous fluid 29 flows through the fluid conduits 21f and 26c provided in respective bottoms of said grooves 21e and 26b, the flow resistance occurring from said flow said of said viscous fluid 29 also constitute a force to transfer the power.

Thus, with the differential gear of this exemplary embodiment, similar to the case of the aforementioned second exemplary embodiment, since the revolution difference occurring between respective drive shafts 23 and 24 is being restricted by the resistance occurring when respective balls 27 roll about against existence of said viscous fluid 29, the revolution difference restricting effect so changes by itself to rise gradually corresponding to the degree of the differences in respective revolution rates.

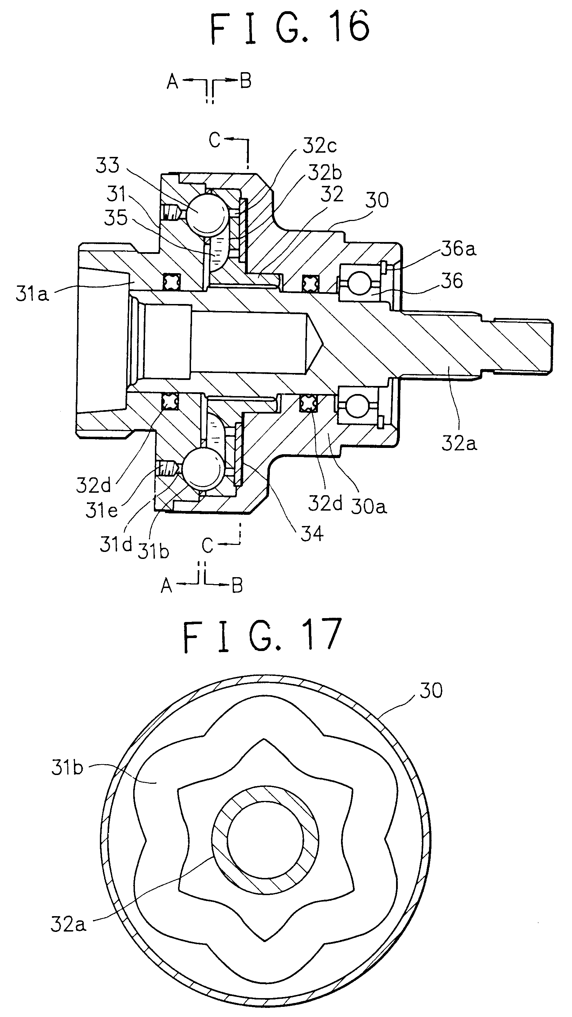

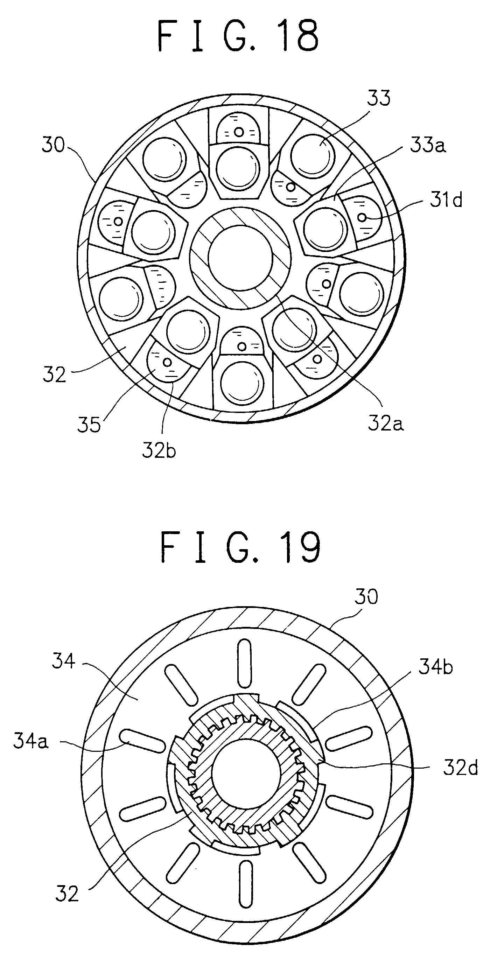

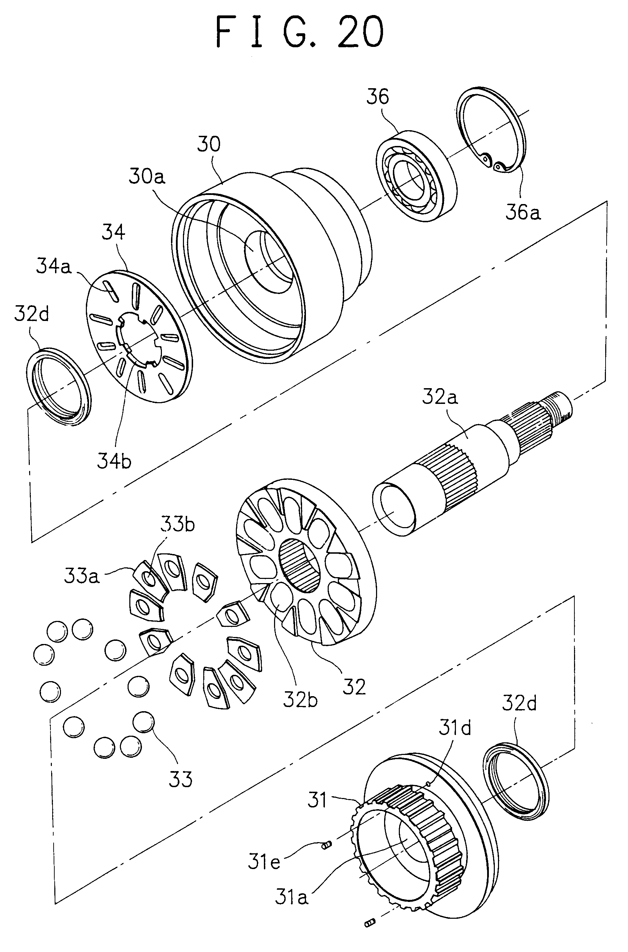

Referring to some other exemplary embodiment, Fig. 16 through Fig. 22 show the fourth exemplary embodiment of this invention, Fig. 16 being a side sectional view of the power transmission device of the fourth exemplary embodiment of this invention, Fig. 17 showing cross-section A-A of the drawing in Fig. 16, Fig. 18 showing cross-section B-B of the drawing in Fig. 16 ¥, Fig. 19 showing cross-section C-C of the drawing in the Fig. 16 and Fig. 20 being an exploded perspective view of said power transmission device.

Said power transmission device consists of a case 30, a case cover 31 closing one end of said case 30, a disc plate 32 being positioned coaxially with said case 30, multiple number of balls 33 positioned between the opposing surfaces of said case cover 31 and disc plate 32 and a movable plate 34 being positioned at the other side of said disc plate 32, the space inside said case 30 where said multiple number of balls 33 roll about being filled by a viscous fluid 35.

Namely, said case 30 and 31 constitute one rotary member, said disc plate 32 constitutes the other rotary member, said multiple number o f balls 33 constitute the rolling elements and said movable plates 34 constitutes the flow restricting means.

Said case30 is of a cylindrical construction with its one end opened and with a bearing 30a supporting one end of said disc plate 32 installed at the center of its outer end.

Said case cover 31 is of a disc shape being provided with, at its center, a bearing 31a to support the other end of said disc plate 32. In the surface facing said disc plate 32 of said case cover 31, a groove 31b is being provided which engages with said multiple number of balls 33, said groove 31b being formed in continuation along the peripheral direction making zigzag curves whereby said multiple number of balls 33 make reciprocal movements when said balls 33 follow the trace of said zigzag curves.

On the outer side of said case cover 31, a coupler structure 31c is being provided, said coupler structure 31c connecting to one of the drive shafts, indication of which being omitted from relevant drawings, and the peripheral surface of said coupler structure 31c being formed in spline.

Also, said case cover 31 is being provided with a feed port 31d to feed said viscous fluid 35 into said case 30, said feed port 31d being so designed to be plugged by a screw plug 31e after said viscous fluid 35 has been charged into said case 30. Said feed port 31d is provided at two places, one being meant for the feeding purpose and the other being meant for internal air purge purpose.

Said disc plate 32 is being provided with a shaft 32a extending toward the axial direction, said shaft 32 connecting to the other drive shaft, indication of which being omitted from relevant drawings. Said shaft 32a of said disc plate 32 is being suspended by the bearing 30a of said case 30 via the bearing 36 and said bearing 36 is being attached to said case 30 by the C-ring 36a.

In the surface facing said case cover 31 of said disc plate 32, multiple number of grooves 32b engaging respective balls 33 are being formed, said grooves 32b extending linearly toward the radial directions and being laid out at equal intervals in the peripheral direction. In each groove 32b, holes 32c piercing through the thickness of said disc plate 32 to its other side are provided, two holes 32c in each groove 32b at a prescribed distance along the longitude of said groove 32b.

Also, on one side of said disc plate 32, plural number of projections 32d are being provided at prescribed intervals to fit to the periphery of said shaft 32a. Moreover, an oil seal 32d each is being inserted between said disc plate 32 and said case 30 and between said disc plate 32 and said case cover 31.

Said multiple number of balls 33 are being laid out along the peripheral direction of said disc plate 32, engaging individually with said groove 31b of said case cover 31 and multiple number of grooves 32b of said disc plate 32 for free rolling. Respective balls 33 are being retained individually by multiple number of ball holders 33a of a plate shape for free rolling, each ball holder 33a being provided with a hole 33b to retain each ball 33. Said ball holders 33a are being inserted into space occurring between said case cover 31 and said ball disc 32 for free sliding inside.

Said movable plate 34 is of a disc shape being positioned for free rotation facing said disc plate 32. In said movable plate 34, multiple number of slots 34a are being formed at intervals equal to those of said multiple number of grooves 32b along the peripheral direction, said slots 34a mating to respective holes 32c corresponding to respective grooves 32b formed in said disc plate 32 and said slots 34a constituting a flow conduit connecting through respective grooves 32b carrying balls 33 individually inside.

Also, notches 34b are being formed at prescribed intervals around the inner periphery of said movable plate 34 which are designed to engage with respective projections 32d of said disc plate 32, said notches 34b being so dimensioned that said projections 32d may move inside said notches for a prescribed distance.

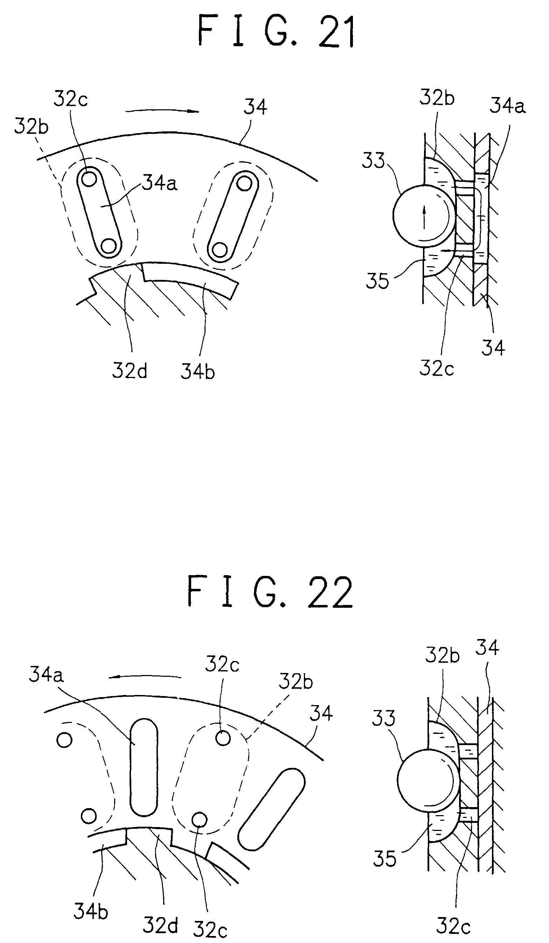

Namely, as shown in Fig. 21, when said movable plate 34 rotates in a direction, the end of each notch 34b hits one side of each projection 32d to stop rotation of said movable plate 34, where each slot 34a coincides with two holes 32c each opened in the each grooves 32b to make open connections, while when said movable plate 34 rotates toward the other direction, as shown in Fig.22, the other end of each notch 34b hits the side of the other side of each projection 32d to stop rotation of said movable plate 34, where each slot 34a does not coincide with the two holes 32c of each groove 32b.

Said viscous fluid 35 consists of such a substance as silicon oil and it is being filled inside the space hermetically sealed by the structures of said case 30, said case cover 31 and said disc plate 32.

With a power transmission device of the aforementioned structure, when a revolution difference occurs between the case 30 and the disc plate 32, respective balls 33 make reciprocal movements along respective grooves 32b of the disc plate 32 while rolling along the trace of the groove 31b of the case cover 31.

At this time, when the revolution difference between said case 30 and said disc plate 32 expands larger, resistance of said viscous fluid 35 against rolling about of respective balls 33 increases, thus causing power transmission between said case 30 and said disc plate 32. In this case, since the resistance of said viscous fluid 35 increases as the moving speed of said balls 33 rises higher, power transmission increases corresponding to the degree of the revolution difference occurring between said case 30 and said disc plate 32.

Also, when said balls 33 roll about, said viscous fluid 35 reacts to flow through respective grooves 31b and 32b beyond respective balls 33, the disc plate 32 is pushed toward the case 30 side and friction against slides occurring this time also works to transfer the power.

Also, when the revolution difference between said case 30 and said disc plate 32 occurs in a prescribed direction of relative-rotation, the movable plate 34 turns toward the same direction as that of said case 30 and, as shown in Fig. 21, each slot 34a provided in said movable plate 34 opens connection of the two holes 32c of each groove 32b. At this time, when respective balls 33 moves inside said grooves 32b, said viscous fluid 35 shifts freely from one side of said grooves 32b to the other side passing through the slots 34a of said movable plate 34.

While, if the revolution difference between said case 30 and said disc plate 32 occurs in the other relative-direction, said movable plate 34 turns in the same direction of rotation of said case 30, closing connection between the two holes 32c underneath each groove 32b via each slot 34a, since said slots 34a of said movable plate move away from the coinciding position. When this occurs, shifts of said viscous fluid 35 from one side in each groove 32b to the other side become impeded and the resistance of said viscous fluid 35 against rolling about of respective balls 33 increases.

Thus, with the power transmission device of this exemplary embodiment, similar to the case of the aforementioned first exemplary embodiment, since the power is being transferred between the case 30 and disc plate 32 by the resistance occurring when respective balls 33 roll about inside respective grooves 32b, the power transmission effect so changes by itself to rise gradually corresponding to the degree of the difference in the revolution rates between said case 30 and disc plate 32.

Also, since the movable plate 34 which turns together with said case 30 works to close connection for free shifts of said viscous fluid 35 between two sides across the ball 33 of each groove 32b when the revolution difference between said case 30 and said disc plate 32 occurs in one prescribed relative-direction only, similar to the case of the aforementioned first exemplary embodiment, the power transmission effect occurring from the resistance against movements of respective balls can be made larger in one direction of relative-rotation and smaller in the other direction of relative-rotation.

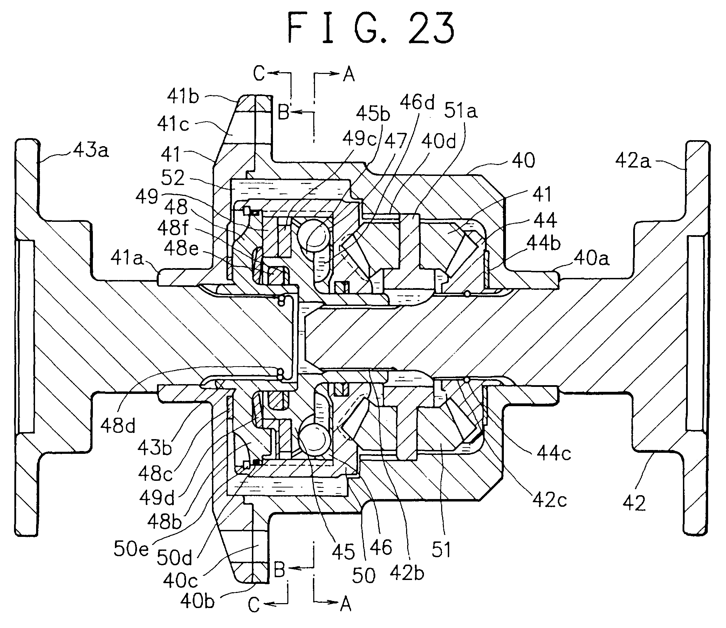

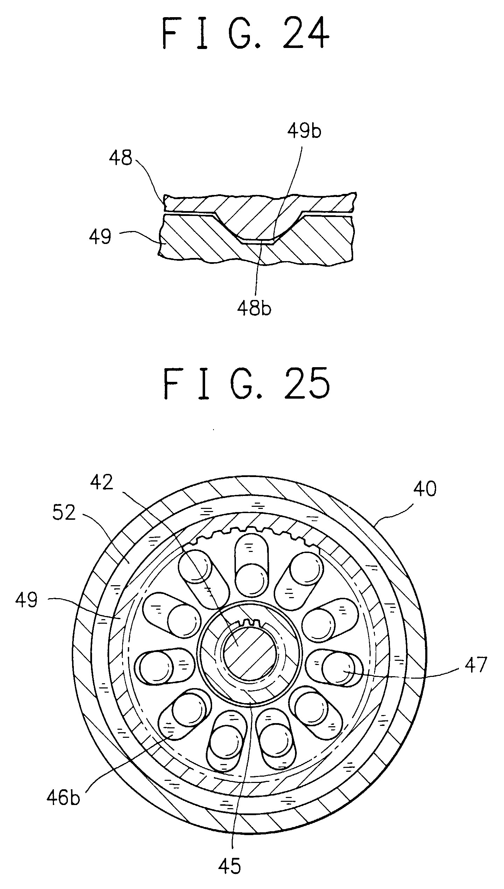

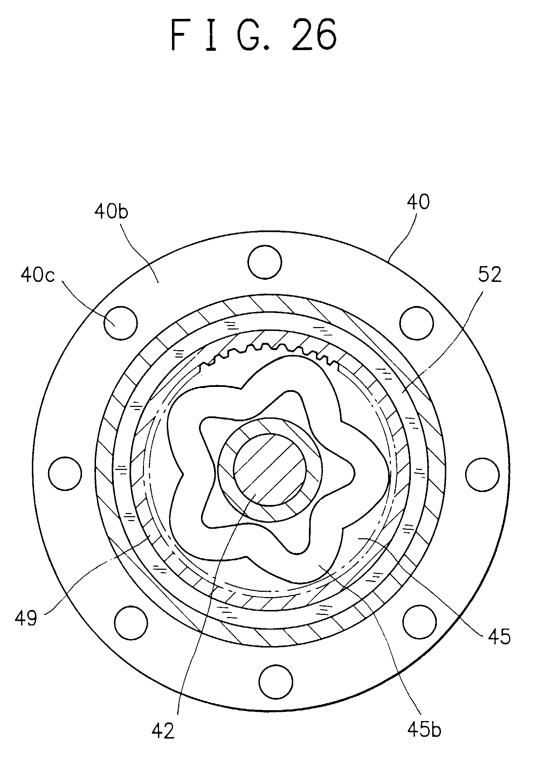

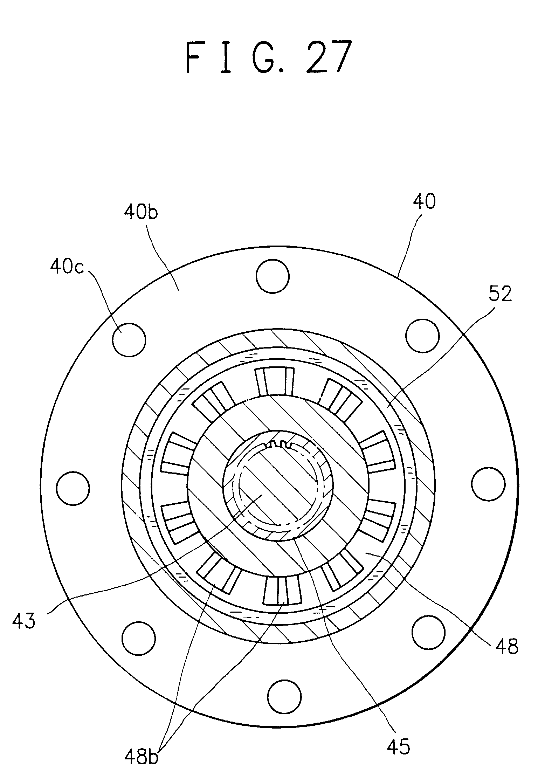

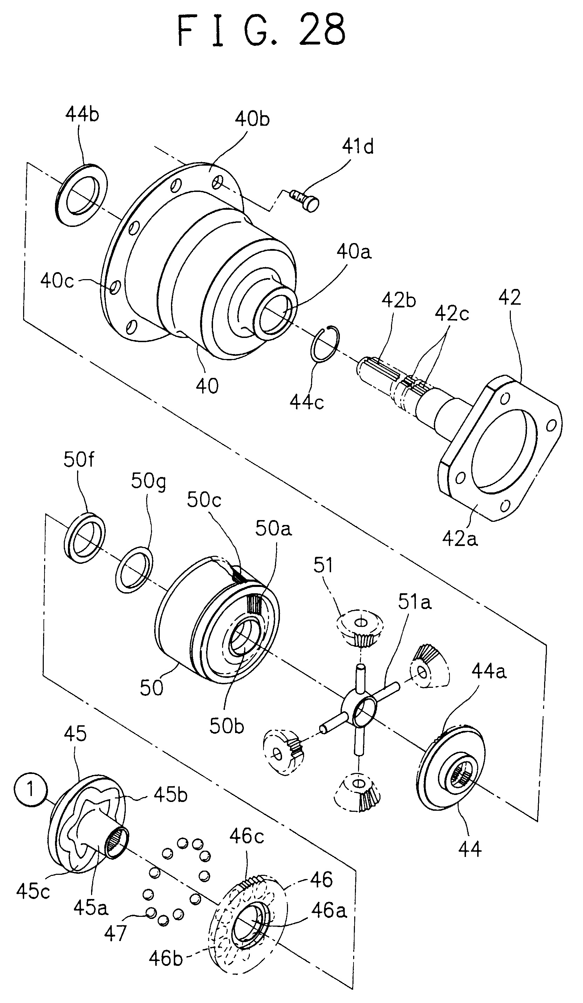

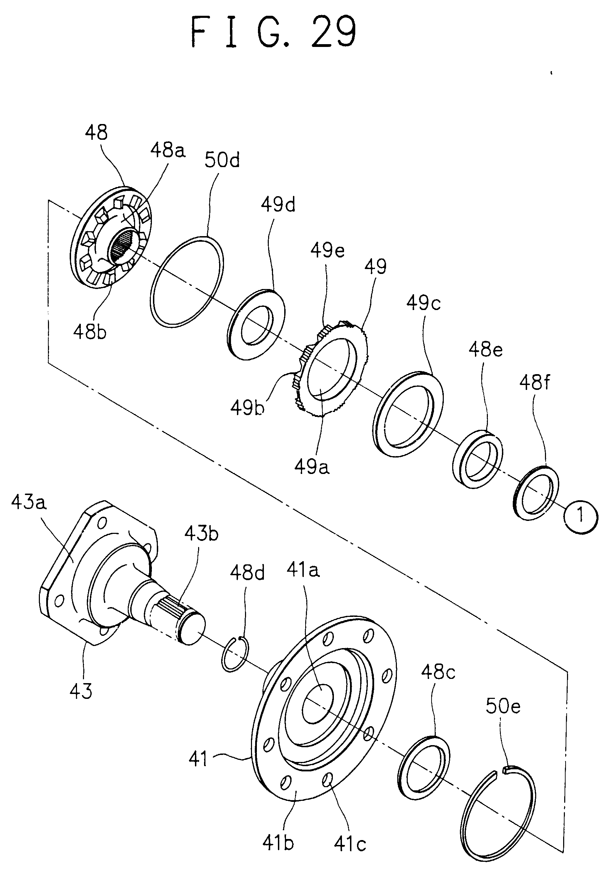

Referring to some other exemplary embodiment, Fig. 23 through Fig. 29 show the fifth exemplary embodiment of this invention, which has been applied as a power transmission device, namely a differential gear, Fig. 23 being a side sectional view of the differential gear of the fifth exemplary embodiment of this invention, Fig. 24 being an enlarged cross-sectional view of a portion of the drawing in Fig. 23, Fig. 25 showing cross-section A-A of the drawing in Fig. 23, Fig. 26 showing cross-section B-B of the drawing in Fig. 23, Fig. 27 showing cross-section C-C of the drawing in Fig. 23, Fig. 28 and Fig. 29, two drawing together, being a set for an exploded perspective view of said differential gear. Meanwhile, the alternate long and short dash lines in Fig. 28 and Fig. 29 stand for continuation via the same number coding, namely 〈1〉, of the parts being drawn in these two drawings.

Said differential gear consists of a gear case 40 which constitutes the input side rotary member, a gear case cover 41 closing one end of said gear case 40, a pair of drive shafts 42 and 43 being positioned coaxially, a side gear 44 which rotates integrally with one 42 of the two drive shafts, the first ball disc 45 which rotates integrally also with said one drive shaft 42, the second ball disc 46 facing said first ball disc 45, multiple number of balls 47 being laid out between said ball discs 45 and 46, the first thrust disc 48 which rotates integrally with the other drive shaft 43, the second thrust disc 49 facing said first thrust disc 48, a housing gear 50 which rotates integrally with said second ball disc 46 and said second thrust disc 49, total four pinion gears 51 which work to transfer the power of said gear case 40 to said side gear 44 and said housing gear 50 while allowing occurrence of revolution difference between said side gear 44 and housing gear 50 and a viscous fluid 52 being filled inside said gear case 40.

Namely, said side gear 44 and said first ball disc 45 constitute one of the two output side rotary members and said second ball disc 46, said first thrust disc 48, said second thrust disc 49 and said housing gear 50 constitute the other output side rotary member, respectively.

Said gear case 40 is of a cylindrical construction with its one end opened and with a bearing 40a supporting one 42 of the two drive shafts installed at its center. Around the periphery of said gear case 40, a flange 40b is being provided wherewith multiple number of holes 40c for bolting are being opened. Also groove 40d is provided in the inner peripheral surface of said gear case 40 which works to hold said pinion gears 47.

Said gear case cover 41 is of a disc shape being provided with, at its center, a bearing 41a to support the other drive shaft 43. Around the periphery of said gear case cover 41, a flange 41b is being provided wherein multiple number of holes 41c for bolting are being opened.

It means that said gear case cover 41 is being attached to said gear case 40 by bolts 41d clamping said flanges 40b and 41b of said gear case 40 and said gear case cover 41, together, respectively.

Said two drive shafts 42 and 43 are being equipped with flanges 42a and 43a to connect to the left-hand side and right-hand side drive wheels of a motor vehicle, and one 42 of the two drive shafts carries a longer length toward the axial direction than the other drive shaft 43.

Said one 42 of the two drive shafts is being provide with splined coupler structures 42b and 42c, at two places around the periphery of its cylindrical shaft and the tip end coupler structure 42b is being connected to said first ball disc 45 and the intermediate coupler structure 42c is being connected to said side gear 44. The other drive shaft 43 also is being provided with a splined coupler structure 43b around the periphery of its cylindrical shaft, said coupler structure 43b connecting to said first thrust disc 48.

Said side gear 44 is being connected coaxially to said one 42 of the two drive shafts and on its surface facing toward the other drive shafts 43, a bevel gear 44a is being formed. Also, a washer 44b is being inserted between said side gear 44 and said gear case 40 and a C-ring 44c is being inserted between said side gear 44 and said drive shaft 42 to fasten connection between said two parts.

Said first ball disc 45 is provided with a cylindrical nose 45a which extends toward the axial direction whereto the one 42 of the two drive shafts is being inserted and fastened. In the drive shaft 42 side surface of said first ball disc 45 facing said second ball disc 46, a groove 45b is formed which engages with said multiple number of balls 47. Said groove 45b extends in continuation in the peripheral direction of said first ball disc 45 making zigzag curves toward the center and outside said first ball disc 45, mutually. In the bottom of said groove 45b, multiple number of holes 45c piercing through the thickness of said first ball disc 45 opening to the other side thereof are being opened.

Said second ball disc 46 is of a ring shape provided with, at its center, an opening 46a through which said cylindrical nose 45a of said first ball disc 45 is being inserted. In the drive shaft 43 side surface facing said first ball disc 45 of said second ball disc 46, multiple number of grooves 46b are being formed where said multiple number of balls 47 engage individually with. Said multiple number of grooves 46b extend toward the radial directions of said second ball disc 46 being laid out at equal intervals around the peripheral direction. Also, around the outer periphery of said second ball disc 46, multiple number of key grooves 46c for coupling to the housing gear 50 are being formed.

Said multiple number of balls 47 are being engaged individually with respective grooves 45b and 46b of respective ball discs 45 and 46 by about a half of their diameter into said groove 45b and by about remaining half of their diameter into respective grooves 46b, individually. When a revolution difference occurs between said ball discs 45 and 46, said balls 47 start rolling about along the traces of said grooves 45b and 46b.

Said first thrust disc 48 is provided with a cylindrical nose 48a extending toward the axial direction whereto the other drive shaft 43 is being inserted and fastened. In the drive shaft 42 side surface facing said second thrust disc 49 of said first thrust disc 48, multiple number of projections 48b which extend radially are being formed at equal intervals around the peripheral direction. As shown in Fig. 24, said projections 48b are being formed by flat top and slopes at a prescribed angle on both sides, said slopes being in a slightly convex shape.

Also, a washer 48c is being inserted between said first thrust disc 48 and said gear case 40 and a C-ring 48d is being used to fasten said first thrust disc 48 and said drive shaft 43. Moreover, an oil seal 48e and a backup seal 48f are being inserted between said first disc 48 and said first ball disc 45.

Said second thrust disc 48 is of a ring shape being provided with, at its center, an opening 49a through which the nose of said first thrust disc 48 is being inserted. In the drive shaft 43 side surface facing said first thrust disc 48 of said second thrust disc 49, multiple number of dents 49b extending radially are being provided at equal intervals around the peripheral direction. As shown in Fig. 24, said dents 49b consists of a flat bottom and slopes of a prescribed angle on both side, said dents 49b engaging individually with respective projections 48b of said first thrust disc 48 mating their profiles with their slopes in contacts.

Also, a thrust washer 49c is being inserted between said second thrust disc 49 and said first ball disc 45. Moreover, a disc spring 49d at depressed state is being inserted between said thrust discs 48 and 49 which applies a pre-load to said second thrust disc 49 and said thrust washer 49c. Also, around the outer periphery of said second thrust disc 49, multiple number of key grooves 49e for coupling to the housing gear 50 are being formed.

Said housing gear 50 is of cylindrical construction with a bevel gear 50a being formed on its drive shaft 42 side surface. Also, at the center of this surface, an opening 50b is being formed through which the nose 45a of said first ball disc 45 is being inserted.

Said housing gear 50 houses said first ball disc 45, said second ball disc 46, said multiple number of balls 47, said first thrust disc 48 and said second thrust disc 49, with the key grooves 46c of said second ball disc 46 and the key grooves 49e of said second thrust disc 49 engaging with multiple number of key grooves 50c being formed around the inner periphery thereof.

Meanwhile, said second thrust disc 49 is being so structured to slide slightly toward the axial direction under spline-coupled structure. Also, a sealing O-ring 50d is being inserted into the gap between the inner periphery of said housing gear 50 and the outer periphery of said first thrust disc 48. Moreover, a C-ring 50e is being inserted inside the inner periphery of said housing gear 50 and the peripheral edge of said first thrust disc 48 is engaging with said C-ring 50e. Furthermore, an oil seal 50f and a backup seal 50g are being inserted between said housing gear 50 and said first ball disc 45.

Said Pinion gears 51 are being supported for free tuning by pinion shafts 51a orthogonally positioned each other, each pinion gear engaging with the bevel gear 44a of said side gear 44 and bevel gear 50a of said housing gear 50. Said pinion shafts 51a are being fastened to the groove 40d of said gear case 40 to rotate integrally with said gear case 40. Namely, a revolution difference transference mechanism is being constituted by said four pinions gears 51 and said pinion shafts 51a, and by individual trailing rotations of said pinion gears 51, said side gear 44 and said housing gear 50 are being allowed to make relative-rotations in relatively-opposing directions from each other.

Said viscous fluid 52 consists of such a substance as silicon oil and it is being filled to the space hermetically sealed by the structures of said gear case 40. said gear case cover 41 and the two drive shafts 42 and 43. Meanwhile, said vlscous fluid 52 flows all the way through the space inside respective grooves 45b and 46b passing through the holes 45c piercing the thickness of said first ball disc 45.

With a differential gear of the aforementioned structure, the ring gear (indication being omitted from the drawing) which works to transfer the drive force of the engine is being coupled to the flange 40b of said gear case 40 and the whole structure rotates around the axis of rotation of said gear case 40.

With the differential gear of this exemplary embodiment, in case the revolution difference between the two drive shafts 42 and 43 expands wider such as when one only of the two drive wheels starts skidding failing to grab the road surface under a slippery surface environment, the resistance against rolling about of respective balls 47 pushing said viscous fluid 52 and the resistance against rotation of respective ball discs 45 and 46 of the viscous fluid 52 increases which in turn work to restrict the revolution difference.

At this time, shear resistance occurs by the shearing movements of said ball discs 45 and 46, thrust resistance occurs with said multiple number of balls 47 rolling about against existence of said viscous fluid 52 and friction resistance occurs by depression of said first ball disc 45 to said thrust washer 49c occurs being caused by said viscous fluid 52 being pushed by respective balls 47.

The flow resistance occurring when said viscous fluid 52 passes through narrow space such as the gaps made between respective ball discs 45 and 46 and holes 45c also works as a revolution difference restricting effect.

Namely, since the thrust resistance, friction resistance and flow resistance occur in combination, in addition to occurrence of the shear resistance by said viscous fluid 52, the revolution difference restricting effect exhibits such a characteristic as will increase gradually corresponding to the degree of the difference between revolution rates of respective drive shafts 42 and 43.

Also, in case power transmission varies although the revolution difference between respective drive shafts 42 and 43 is insignificant such as when friction between the road surface and one of the two drive wheels is lessened, since one of the two thrust discs 48 and 49 works to transfer the power to its counterpart, reaction in the axial direction occurs between their respective projections 48b and dents 49b which in turn works to depress the second thrust disc 49 to the thrust washer 49c and the friction resistance occurring at this time works as a revolution difference restricting effect.

In this case, since respective projections 48b and dents 49b depress one another at their sloped structures to move respective thrust discs 48 and 49 toward the axial direction each other, the more moderate the angles of the slopes of said respective projections 48b and dents 49b is, the larger the revolution difference restricting effect becomes.

Also, since the disc spring 49d exerts a certain re-load to the second thrust disc 49 toward the thrust washer 49c, effective revolution difference restricting force can be obtained from the initial stage. Meanwhile, the revolution difference restricting force occurring here is sensitive to the power variation between respective drive shafts 42 and 43.

Thus, with the differential gear of this exemplary embodiment, since the revolution-sensitive revolution difference restricting force occurring from respective ball discs 45 and 46, respective balls 47 and the viscous fluid 52 is so designed to work in combination with the thrust resistance, friction resistance and flow resistance by the viscous fluid 52, in addition to the shear resistance by said viscous fluid 52, the revolution difference restricting force exhibits such a characteristic as will increase gradually corresponding to the degree of the difference in the revolution rates between respective drive shafts 42 and 43. Consequently, the revolution difference can be properly and accurately restricted matching various driving statuses and, moreover, since the differential gear of this exemplary embodiment does not exhibit abrupt revolution difference restricting effects at initial stages of occurrences of revolution difference, respective drive wheels are not bound each other, thus providing better chances of successful combinations with antilock brake systems.

Also, with this exemplary embodiment, since torque-sensitive revolution difference restricting effects can be obtained by functions of respective thrust discs 48 and 49, in combination with aforesaid revolution-sensitive revolution difference restricting effects, a this exemplary embodiment can provide a differential gear which can cope with any traveling and driving conditions, on-road or off-road, properly and accurately.

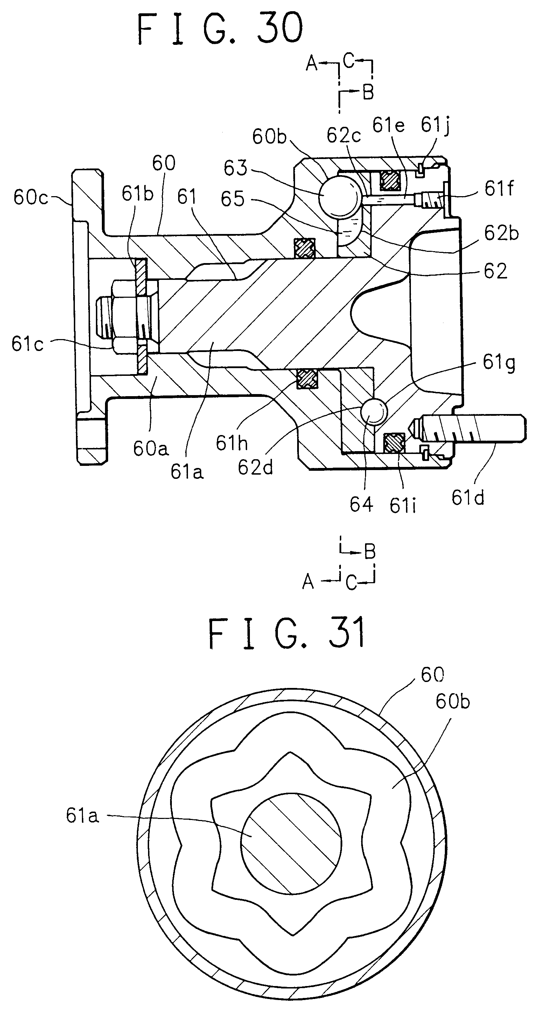

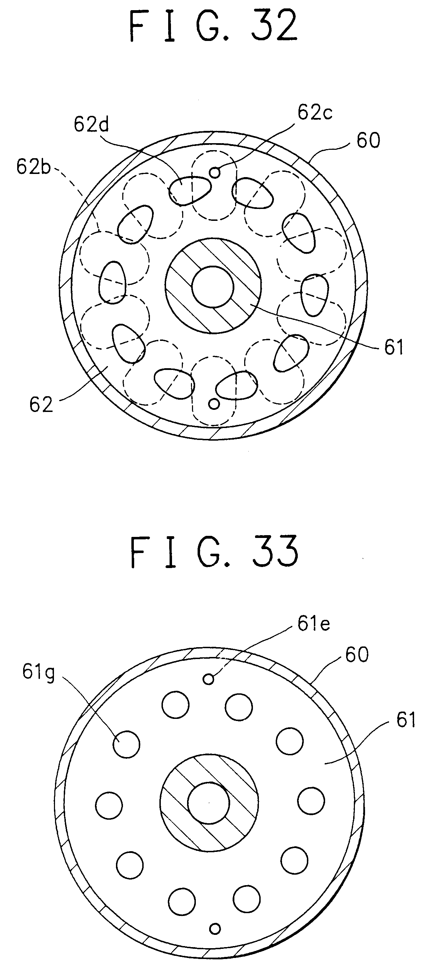

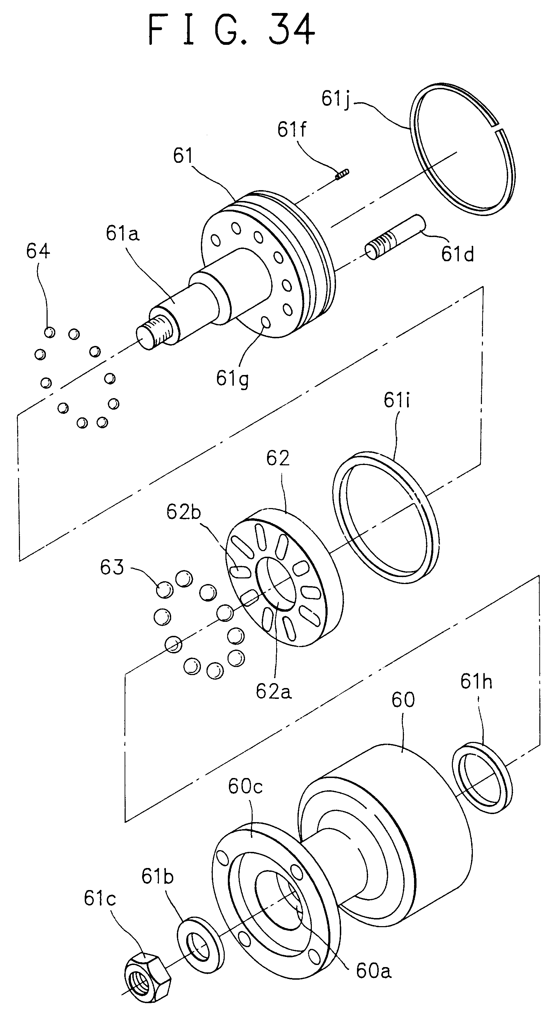

Referring to some other exemplary embodiment, Fig. 30 through Fig. 36 show the sixth exemplary embodiment of this invention, Fig. 30 being a side sectional view of the power transmission device of the sixth exemplary embodiment of this invention, Fig. 31 showing cross-section A-A of the drawing in Fig 30, Fig. 32 showing cross-section B-B of the drawing in Fig. 30, Fig. 33 showing cross-section C-C of the drawing fin Fig. 30 and Fig. 34 being an exploded perspective view of said power transmission device.

Said power transmission device consists of a case 60, a disc plate 61 positioned coaxially with said case 60, a thrust disc 62 positioned between an end of said case 60 and said disc plate 61, multiple number of balls 63 being laid out between and end of said case 60 and said thrust disc 62 and multiple number of thrust balls 64 laid out between said disc plate 61 and said thrust disc 62, the space inside said case 60 where said multiple number of balls 63 move about being filled by a viscous fluid 65. Namely, said case 60 constitutes one of the two rotary members, said disc plate 61 and thrust disc 62 constitute the other rotary member and said multiple number of balls 63 constitute the rolling elements, respectively.

Said case 60 is of a cylindrical construction with its one end opened and with a bearing 60a supporting one end of said disc plate 61 installed at the center of its outer end. In the surface facing said disc plate 61 of said case 60, a groove 60b to engage with said multiple number of balls 63 is being formed in continuation in the peripheral direction making zigzag curves along the radial directions, said zigzag curves working to let respective balls 63 make reciprocal movements inside respective grooves 61b of said disc plate 61. The other end of said case 60 is being formed into a flange 60c which connects to one of the drive wheel shafts indication thereof being omitted from relevant drawings.

Said disc plate 61 is being equipped with a shaft 61a extending toward the axial direction, the tip end of said shaft 61a being clamped on the other side of said case 60 by a stopper plate 61b and a nut 61c thus housing said disc plate 61 inside said case 60 for free rotation. The other side of said disc plate 61 is being connected to the other drive wheel shaft indication thereof being omitted from relevant drawings by use of pins 61d.

Said disc plate 61 is also provided with a feed port 61e to fill said viscous fluid 65 inside said case 60, said feed port 61e being plugged by a screw plug 61f after said viscous fluid has been charged into said case 60. Said feed port 61e is provided at two places, one being meant for the feeding purpose, the other being meant for internal air purge purpose.

Also, in the surface facing said thrust disc 62 of said disc plate 61, multiple number of dents 61g are being formed at equal intervals along the peripheral direction, said dents 61g engaging individually with about a half of the diameter of said thrust balls 64, thus retaining said thrust balls 64. Moreover, oil seals 61h and 61i and a C-ring 61j are being inserted between said disc plate 61 and said case 60.

Said thrust disc 62 is provided with an opening 62a through which the shaft 61a of said disc plate 61 is being inserted and being supported around said shaft 61a for free rotation. In the surface facing said case 60 of said thrust disc 62, multiple number of grooves 62b to engage with said multiple number of balls 63 are being formed, said grooves 62b extending linearly toward the radial directions and being laid out at equal intervals around the peripheral direction thereof. In each groove 62b a hole 62c piercing through the thickness of said thrust disc 62 opening into the other side thereof is being formed, said hole 62c working to feed said viscous fluid and connecting to said feed port 61e provided in said disc plate 61.

Also, in the surface facing said disc plate 61 of said thrust disc 62, multiple number of dents 62d are being formed at equal intervals along the peripheral direction, said dents 62d engaging individually with about the remaining half of the diameter of said thrust balls 64, thus retaining said thrust balls 64. Meanwhile, said dents 62d are so designed that the bottom profile of each dent 62d moderates itself in the roundness toward a prescribed peripheral direction.

Said multiple number of balls 63 are being laid out in the peripheral direction of said thrust disc 62, engaging individually with the groove 60b of said case 60 and the multiple number of grooves 62b of said thrust disc 62 for free rolling.

Said multiple number of thrust balls 64 are being laid out in the peripheral direction of said disc plate 61, engaging individually with respective dents 61g of said disc plate 61 and respective dents 62d of said thrust disc 62, said disc plate 61 and said thrust disc 62 being coupled to rotate together integrally.

Said viscous fluid 35 consists of such a substance as silicon oil and it is being filled into the space hermetically sealed by the structures of said case 60 and said disc plate 61.

With a power transmission device of the aforementioned structure, when a revolution difference occurs between the case 60 and the disc plate 61, respective balls 63 make reciprocal movements inside respective grooves 61b being formed in the disc plate 61, while rolling along the trace of the groove 60b formed in said case 60.

At this time, when the revolution difference between said case 60 and said disc plate 61 expands wider, the resistance occurring when said balls 63 roll about against existence of said viscous fluid 65 increases, thus effecting power transmission between said case 60 and said disc plate 61. Under said circumstances, since the resistance of said viscous fluid 65 increases as the moving speed of respective balls 63 rise higher, the power being transferred increases gradually corresponding to the degree of the difference in the revolution rates between said case 60 and said disc plate 61.

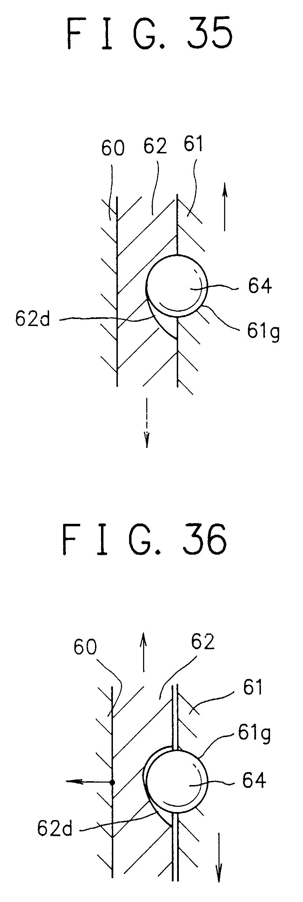

At that time, when the revolution difference between said case 60 and said disc plate 61 occurs in the prescribed one direction of relative-rotation, as shown in Fig. 35, force from each thrust ball 64 is applied to the surface contacting each thrust ball 64 of each dent 61g of said disc plate 61 and to the surface contacting said thrust ball 64 of each dent 62d of said thrust disc 62.

While, when the revolution difference between said case 60 and said disc plate 61 occurs in the other relative-direction of rotation, as shown in Fig. 36, the force from each thrust ball 64 is applied to the surface of the same profile as of the thrust ball 64 of each dent 61g of said disc plate 61, while with the dent 62d of said thrust disc 62, the force is applied to the midway toward the peripheral direction of the moderating bottom profile. Thus, on the thrust disc 62 side, the thrust ball 64 works to move beyond the current position further toward the moderated profile, its reaction works in the axial direction to push said thrust disc 62 onto the surface of said case 60 and the friction against sliding occurring here enhances the power transmission effect.

Thus, with the power transmission device of this exemplary embodiment, similar to the case of the aforementioned first exemplary embodiment, since the power is being transferred between the case 60 and disc plate 61 by resistance occurring when respective balls 63 roll about against existence of the viscous fluid 65, the power transmission effect so changes by itself gradually corresponding to the degree of the difference in the revolution rates between said case 60 and disc plate 61.

Also, since the multiple number of thrust balls 64 connect the disc plate 61 and the thrust disc 62 via respective dents 61g and 62d being formed in said disc plate 61 and said thrust disc 62, respectively, and as they are being so structured to cause a resistance by friction against sliding between said thrust disc 62 and said case 60 by producing a reaction force from respective thrust balls 64 only when the revolution difference between said case 60 and said disc plate 61 occurs in a prescribed relative-direction of rotation, the power transmission effect can be made larger when the revolution difference is occurring in the prescribed relative-direction of rotation and smaller when the revolution difference is occurring in the other relative-direction of rotation.

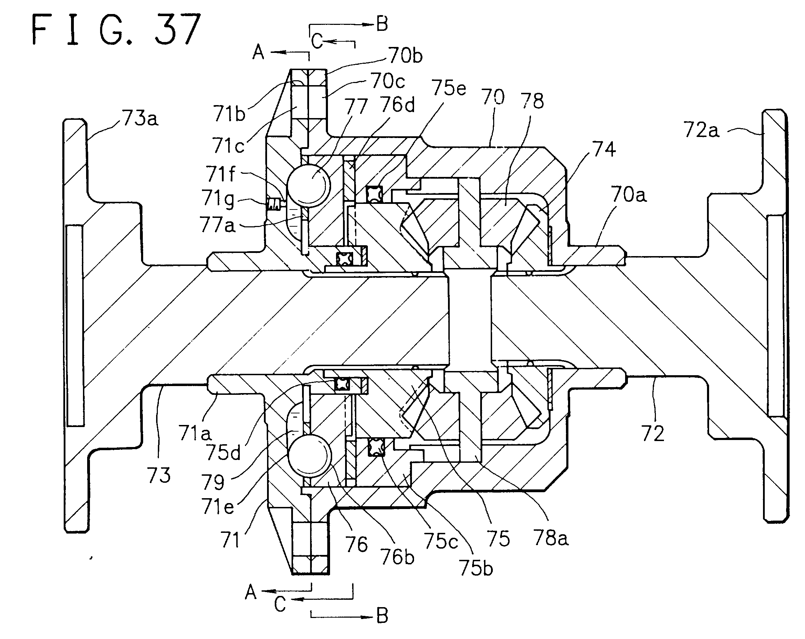

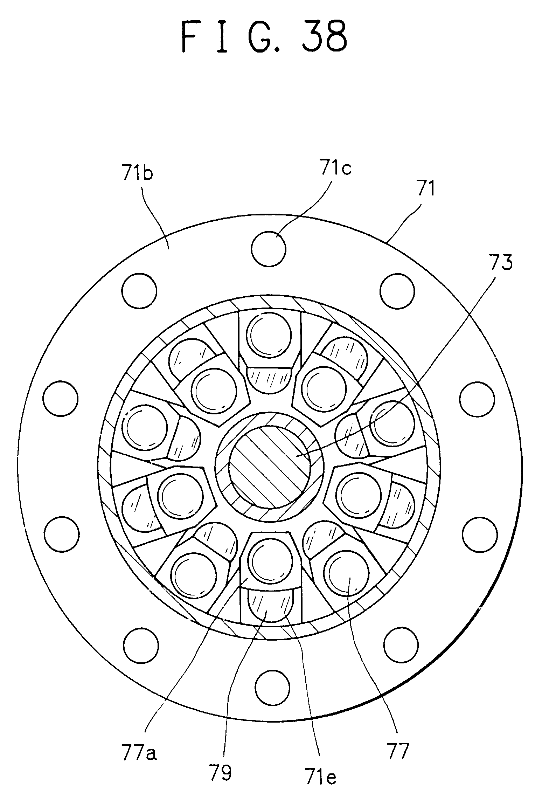

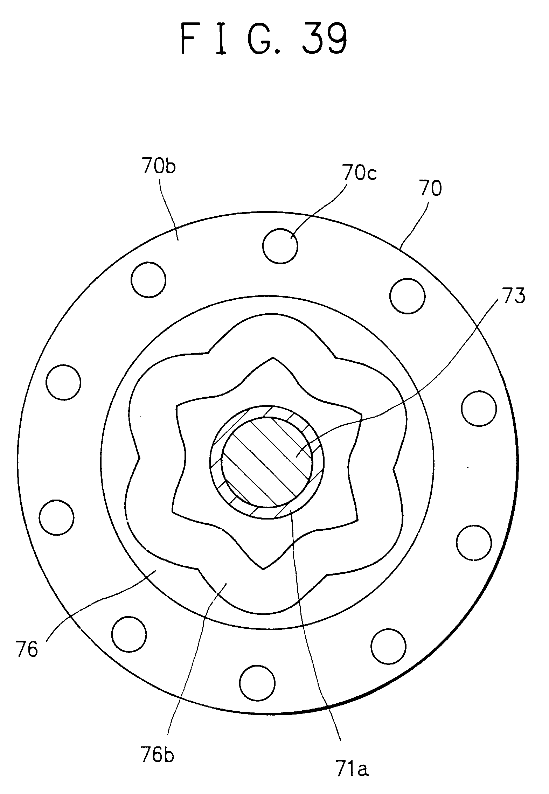

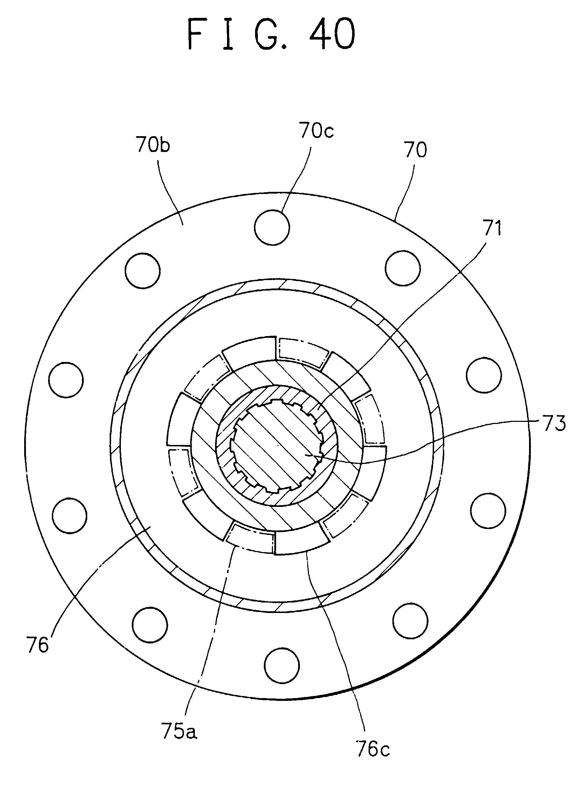

Referring to some more exemplary embodiment, Fig. 37 through Fig. 42 show the seventh exemplary embodiment of this invention, which has been applied as a power transmission device, namely a differential gear, Fig. 37 being a side sectional view of the differential gear of the seventh exemplary embodiment of this invention, Fig. 38 showing cross section A-A of the drawing in Fig. 37, Fig. 39 showing cross-section B-B of the drawing in Fig. 37. Fig. 40 showing cross-section C-C of the drawing in Fig. 37 and Fig. 41 and Fig. 42, two drawings together, being a set for an exploded perspective view of said differential gear. Meanwhile, the alternative long and short dash lines in Fig. 41 and Fig. 42 stand for continuation via the same number coding, namely 〈1〉, of the parts being drawn in these two drawings.

Said differential gear consists of a gear case 70, a gear case cover 71 closing one end of said gear case 70, a pair of drive shafts 72 and 73 being positioned coaxially, a pair of side gears 74 and 75 which rotates integrally with respective drive shafts 72 and 73, a ball disc 76 which rotates integrally with said side gear 75, multiple number of balls 77 being laid out between said ball disc 76 and said gear case cover 71 and total four pinion gears 78 which work to transfer the power of said gear case 70 to respective side gears 74 and 75, while allowing occurrences of revolution difference, the space inside said gear case 70 where respective balls 77 roll about is being filled by a viscous fluid 79.

Namely, said gear case 70 constitutes the input side rotary member, said one 72 of the two drive shafts and said side gear 74 constitute one of the two output side rotary members, the other drive shaft 73, side gear 75 and the ball disc 76 constitute the other output side rotary member and said multiple number of balls 77 constitute the rolling elements, respectively.

Said gear case 70 is of a cylindrical construction with its one end opened and with a bearing 70a supporting one 72 of the two drive shafts installed at its center. Around the periphery of said gear case 70, flange 70b is being provided wherein multiple number of holes 70c for bolting are being opened. Also around the inner periphery of said gear case 70, grooves 70d to hold respective pinion gears 78 is being formed.

Said gear case cover 71 is of a disc shaper being provided with, at its center, a bearing 77a to support the other drive shaft 73. Around the periphery of said gear case cover 71, a flange 71b is being provided wherein multiple number of holes 71c for bolting are being opened. Namely, said gear case cover 71 is being attached to said gear case 70 by bolts 71d clamping said flanges 70b and 71b together.

In the surface facing said ball disc 76 of said gear case cover 71, multiple number of grooves 71e to engage individually with said multiple number of balls 77 are being formed extending linearly toward the radial directions and being laid out at equal intervals along the peripheral direction.

Said gear case cover 71 is also provided with a feed port 71ffto feed said viscous fluid 79 into said case 70, said feed port 71f being so designed to be plugged by a screw plug 71g after said viscous fluid has been charged into said case 70.

Said two drive shafts 72 and 73 are being equipped with flange 72a and 73a, respectively, which connect to the left-hand side and right-hand side drive wheels of a motor vehicle and one 72 of the two drive shafts carries longer length in the axial direction than the other drive shaft 73.

Said one 72 of the two drive shafts is being provided with splined coupler structures 72b an 72c at two place around the periphery of its cylindrical shaft and the tip end coupler structure 72b is being connected to said ball disc 75 and the intermediate coupler structure 72c is being connected to one 74 of the two side gears. Also, the other drive shaft 73 is being provided with splined coupler structure 73b around its periphery, said coupler structure 73b connecting to the other side gear 75.

Said two side gears 74 and 75 are being positioned facing their geared surfaces each other and being connected coaxially to said drive shafts 72 and 73, respectively. A thrust washer 74a is being inserted between said one 74 of the two side gears and said gear case 70. On the surface facing said ball disc 76 of the other side gear 75, plural number of projections 75a are being provided at prescribed intervals around the peripheral direction which work to effect engagement with said ball disc76.

Inside said gear case 70, a spacer ring 75b which covers the periphery of the other side gear 75 is being mounted and oil seals 75c and 75d are being inserted between said side gear 75 and said spacer ring 75b and between said side gear 75 and the bearing 71a of said gear case cover 71, respectively. Also, a thrust washer 75e is being inserted between said side gear 75 and said bearing 71a of said gear case cover 71.

Said ball disc 76 is being provided with an opening 76a wherein said bearing 71a of said gear case cover 71 is being inserted and being suspended around said bearing 71a for free rotation. In the surface facing said gear case cover 71 of said ball disc 76, a groove 76b to engage with respective balls 77 is being formed in continuation in the peripheral direction making zigzag curves along the radial directions, said zigzag curves work to let respective balls 77 make reciprocal movements individually along respective grooves 71e of said gear case 71.

On the end face of said ball disc 76, plural number of projections 76c to engage with the other side gear 75 are being formed at prescribed intervals along the peripheral direction, said ball disc 76 and said side gear 75 being connected mating their projections 76c and 75a alternately, for free shifting toward the axial direction. Also, a thrust washer 76d is being inserted between said ball disc 76 and said side gear 75.

Said multiple number of balls 77 are being laid out around the peripheral direction on the grooved surface of said ball disc 76 engaging individually with multiple number of grooves 71e of said gear case cover 71 and with the groove 76b of said ball disc 76 for free rolling. Said balls 77 are being retained by multiple number of ball holders 77a of a plate shape for free rolling, each ball holder 77a being provided with a hole 77b to retain each ball 77. Also, said ball holders 77a are being inserted into space occurring between said ball disc 75 and said housing gear 76 for free sliding inside and between each ball holder 77a, a spacer 77c each is being inserted.

Said four pinion gears 78 are being supported for free turning by pinion shafts 78a orthogonally positioned each other, each pinion gear 78 engaging with respective side gears 74 and 75. Said pinion shafts 78a are being fastened to the groove 70d of said gear case 70 for integral rotation together with said gear case 70. Namely, a revolution difference transference mechanism is being constituted by said pinion gears 78 and said pinion gears 78, said side gears 74 and 75 are being allowed to make relative-rotation in relatively-opposing directions.

Said viscous fluid 79 consists of such a substance as silicon oil and it is being filled into space hermetically sealed by the structures of said gear case cover 71, said side gear 75 and said spacer ring 75b.

With a differential gear of the aforementioned structure, when a revolution difference occurs between respective drive shafts 72 and 73, respective pinion gears 78 make trailing rotations to allow respective side gears 74 and 75 to make relative-rotation in relatively-opposing directions, thus permitting occurrences of revolution difference. At this time, since said ball disc 76 rotates integrally together with the other drive shaft 73, the revolution difference between said ball disc 26 and said gear case 70. When this occurs, respective balls 77 rolls alone the trace of the groove 76b of said ball disc plate 76 to make reciprocal movements individually inside respective grooves 71e of said gear case cover 71.

At this time , when the revolution difference between said two drive shafts 72 and 73 expands wider, the resistance occurring when respective balls 77 roll about against existence of said viscous fluid 79 increases which in turn works to restrict the revolution difference. In this case, since the resistance of said viscous fluid 79 increases as the moving speed of respective balls 77 rise higher, the revolution difference restricting force increases gradually corresponding to the degree of the difference in the revolution rates between said drive shafts 72 and 73.

Also, when respective balls 77 roll about, said viscous fluid 79 reacts to flow through said grooves 71e and 76b beyond respective balls 77, the disc plate 76 is pushed toward said thrust washer 76d and friction against slides occurring this time also works to restrict the revolution difference.

With a differential gear of this exemplary embodiment, similar to the case of the aforementioned first exemplary embodiment, the revolution difference restricting force, which is being produces by resistance occurring when respective balls roll about against existence o the viscous fluid 79, can be so changed by itself to increase gradually corresponding to the degree of the difference in the revolution rates between the two drive shafts 72 and 73. Also, since the friction against sliding occurring when the disc plate 76 is pushed onto the thrust washer 76d also produces the revolution difference restricting force, torque-sensitive revolution difference restricting effect can also be obtained.

### PROSPECTS FOR INDUSTRIAL APPLICATIONS

As aforementioned, with the power transmission device of this invention, since the power can be transferred while allowing occurrences of revolution difference and, moreover, as smooth power transmission characteristics can be obtained wherewith the power transmission effect increases gradually corresponding to the degree of the difference in the revolution rates of the two rotary members, said power transmission device of this invention can be applied effectively to various machines and equipment requiring said performances, such as ,motor vehicles and its simple structure is very advantageous for reduction of the production cost and, also, for down sizing of the whole structure. Also, since the power transmission device of this invention adjusts the power transmission force by itself, to raise it when the revolution difference is occurring in a prescribed relative-direction and to lower it when the revolution difference is occurring in the other relative-direction, said power transmission device of this invention is more advantageous when it is necessary to change the power transmission force corresponding to the occurring statuses.

## Claims

1. A power transmission device characterized by a structure comprising
a pair of coaxially positioned rotary members facing prescribed surfaces each other and
multiple number of rolling elements being laid out between the opposing surfaces of said pair of rotary members,
the opposing surface of one of said pair of rotary members being provided with grooves to engage with said multiple number of rolling elements for free rolling in prescribed directions,
one groove formed in one of said pair of rotary members being so traced to let respective rolling elements make reciprocal movements inside respective grooves formed in the opposing surface of the other rotary member when revolution difference occurs between said two rotary members and
said grooves of said pair of rotary members being filled by a viscous fluid which causes resistance when respective rolling elements roll about.

2. A power transmission device according to the aforementioned claim 1, but characterized by a structure being additionally equipped with
fluid conduits through which said viscous fluid filled inside said grooves flows by rolling movements of said rolling elements and
a means to restrict the flow of said viscous fluid through said fluid conduits only when the revolution difference between said pair of rotary members occurs in a prescribed relative-direction.

3. A power transmission device according to the aforementioned claim 1 or 2, but characterized by a structure wherewith
said grooves of said pair of rotary members being provided on the radially opposing surface of said pair of rotary members.

4. A power transmission device according to the aforementioned claim 1 or 2, but characterized by a structure wherewith
said grooves of said pair of rotary members being provided on the axially opposing surfaces of said pair of rotary members.

5. A power transmission device according to the aforementioned claim 4, but characterized by a structure being additionally equipped with
a means to cause friction which works to cause friction against slides by pressing a prescribed surface of one of said two rotary members to a prescribed surface of the other rotary member when revolution difference occurs between said pair of rotary members.

6. A power transmission device according to the aforementioned claim 4, but characterized by a structure replacing said means to cause friction with a means to cause friction against slides by pressing a prescribed surface of one of said two rotary members to a prescribe surface of the other rotary member only when revolution difference occurs in a prescribed relative-direction.

7. A power transmission device characterized by a structure comprising
an input side rotary member which rotates by external drive force,
a pair of output side rotary members positioned coaxially in alignment with the axis of rotation of said input side rotary member and
a revolution difference transference mechanism whereby the turning effort of the input side rotary member can be transferred to respective output side rotary members while allowing the revolution difference occurring between said two output side rotary members,
said pair of output side rotary members being equipped with multiple number of rolling elements laid out between prescribed space being produced by opposing surfaces of said pair of output side rotary members,
multiple number of grooves being formed in the surface of one of said two output side rotary members wherewith said multiple number of rolling elements engage for free rolling back and forth in a prescribed direction,
one groove formed in one of said two output side rotary members being so traced to let respective rolling elements make reciprocal movements inside respective grooves formed in the opposing surface of the other output side rotary member when revolution difference occurs between said pair of output side rotary members
and said grooves of said pair of output side rotary members being filled by said viscous fluid which causes resistance when said multiple number of rolling elements roll about.

8. A power transmission device characterized by a structure comprising
an input side rotary member which rotates by external drive force,
a pair of output side rotary members positioned coaxially in alignment with the axis of rotation of said input side rotary member,
a revolution difference transference mechanism whereby the turning effort of said input side rotary member can be transferred to respective output side rotary members while allowing the revolution difference occurring between said pair of output side rotary members,
said input side rotary member and at least one of said pair of output side rotary members being equipped with multiple number of rolling elements between prescribed space being produced by opposing surfaces of said input side rotary member,
multiple number of grooves being formed in the surface of either one of said input side rotary member or at least one of said pair of output side rotary members wherewith said multiple number of rolling elements engage for free rolling back and forth in a prescribed direction,
one groove formed in either one of said input side rotary member or at least one of said pair of output side rotary members being so traced to let respective rolling elements make reciprocal movements inside respective grooves being formed in the surface opposing the surface of the aforesaid either one of said input side rotary member or at least one of said pair of output side rotary members, when revolution difference occurs between said pair of output side rotary members and
said grooves of said input side rotary member and said output side rotary members being filled by said viscous fluid which causes resistance when said multiple number of rolling elements roll about.
